(19) Europäisches Patentamt
European Patent Office
Office européen des brevets

(11) **EP 4 497 781 A1**

(12) **EUROPEAN PATENT APPLICATION**
published in accordance with Art. 153(4) EPC

(43) Date of publication:
**29.01.2025 Bulletin 2025/05**

(21) Application number: **23774436.2**

(22) Date of filing: **02.03.2023**

(51) International Patent Classification (IPC):
*C08L 9/10* (2006.01)          *C08F 220/06* (2006.01)
*C08J 5/02* (2006.01)          *C08L 33/02* (2006.01)

(52) Cooperative Patent Classification (CPC):
**C08F 220/06; C08J 5/02; C08L 9/10; C08L 33/02**

(86) International application number:
**PCT/JP2023/007890**

(87) International publication number:
**WO 2023/181837 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.03.2022 JP 2022046956**

(71) Applicant: **Zeon Corporation
Tokyo 100-8246 (JP)**

(72) Inventor: **SATOH, Yoshitaka
Tokyo 100-8246 (JP)**

(74) Representative: **Kraus & Lederer PartGmbB
Thomas-Wimmer-Ring 15
80539 München (DE)**

(54) **LATEX COMPOSITION AND DIP-MOLDED BODY**

(57)    Provided is a latex composition comprising a conjugated diene polymer (A) latex and an alkali-soluble polymer (B), wherein the alkali-soluble polymer (B) contains 20 to 80 wt% of units of an $\alpha,\beta$-ethylenically unsaturated monocarboxylic acid monomer (b-i), and contains 20 to 80 wt% of units of an additional $\alpha,\beta$-ethylenically unsaturated monomer (b-ii) copolymerizable with the $\alpha,\beta$-ethylenically unsaturated monocarboxylic acid monomer (b-i).

**EP 4 497 781 A1**

**Description**

TECHNICAL FIELD

The present invention relates to a latex composition and dip-molded article.

BACKGROUND ART

Conventionally, it is known that dip-molded articles (such as teats, balloons, gloves, urinary catheters, and stalls) used in contact with the human body can be prepared by dip molding a latex composition containing natural rubber latex. However, in some cases, such dip-molded articles are not suitable for use in direct contact with the mucosa or organs of a living body because the natural rubber latex contains proteins that may cause immediate (Type I) allergic reactions in the human body. In response to this problem, use of synthetic rubber latex instead of the natural rubber latex has been examined.

For example, Patent Document 1 discloses a composition for dip molding comprising a synthetic polyisoprene latex, a sulfur-based vulcanizing agent, zinc oxide, a vulcanization accelerator, and a dispersant, wherein the dispersant is at least one of a salt of an olefin compound-ethylenically unsaturated dicarboxylic acid polymer having a weight average molecular weight of 1,000 to 150,000 and a salt of an olefin compound-ethylenically unsaturated dicarboxylic acid monoester polymer having a weight average molecular weight of 1,000 to 150,000. In the technique for the latex composition for dip molding as disclosed in Patent Document 1, generally, a cross-linking agent such as a sulfur-based vulcanizing agent is added, and then maturation (pre-vulcanization) is performed, because film molded articles to be obtained, such as dip-molded articles, can stably maintain high mechanical strength. While the technique disclosed in Patent Document 1 can provide dip-molded articles having high tensile strength, a further reduction in maturation time has been desired from the viewpoint of improving productivity.

RELATED ART DOCUMENTS

PATENT DOCUMENTS

Patent Document 1: WO 2010/098008

SUMMARY OF THE INVENTION

PROBLEM TO BE SOLVED BY THE INVENTION

The present invention has been made in consideration of such circumstances. An object of the present invention is to provide a latex composition which has high dispersion stability and can afford dip-molded articles having excellent flexibility and tear strength in a relatively short maturation time.

MEANS FOR SOLVING PROBLEMS

The present inventor, who has conducted extensive research, has found that the above problem can be solved by a latex composition comprising a conjugated diene polymer (A) latex, and an alkali-soluble polymer (B) containing 20 to 80 wt% of units of an $\alpha,\beta$-ethylenically unsaturated monocarboxylic acid monomer (b-i). This knowledge has led to completion of the present invention.

Specifically, the present invention provides a latex composition comprising a conjugated diene polymer (A) latex and an alkali-soluble polymer (B), wherein the alkali-soluble polymer (B) contains 20 to 80 wt% of units of an $\alpha,\beta$-ethylenically unsaturated monocarboxylic acid monomer (b-i), and contains 20 to 80 wt% of units of an additional $\alpha,\beta$-ethylenically unsaturated monomer (b-ii) copolymerizable with the $\alpha,\beta$-ethylenically unsaturated monocarboxylic acid monomer (b-i).

In the latex composition according to the present invention, preferably, the alkali-soluble polymer (B) has an absorbance of less than 0.3 in the form of an aqueous solution or aqueous dispersion having a concentration of 3 wt% and a pH of 8.

In the latex composition according to the present invention, preferably, the alkali-soluble polymer (B) contains methacrylic acid ester monomer units or acrylic acid ester monomer units as the units of the additional $\alpha,\beta$-ethylenically unsaturated monomer (b-ii) copolymerizable with the $\alpha,\beta$-ethylenically unsaturated monocarboxylic acid monomer (b-i).

In the latex composition according to the present invention, preferably, the content of the alkali-soluble polymer (B) is 0.1 to 3.0 parts by weight relative to 100 parts by weight of the conjugated diene polymer (A) contained in the latex composition.

In the latex composition according to the present invention, preferably, the conjugated diene polymer (A) is a polymer containing isoprene units.

In the latex composition according to the present invention, preferably, the conjugated diene polymer (A) is an acid-modified conjugated diene polymer.

Preferably, the latex composition according to the present invention further comprises a sulfur-based vulcanizing agent.

Preferably, the latex composition according to the present invention further comprises a vulcanization accelerator.

The present invention also provides a dip-molded article prepared by dip molding of the latex composition.

EFFECTS OF INVENTION

The present invention can provide a latex composition which has high dispersion stability and can afford dip-molded articles having excellent flexibility and tear strength in a relatively short maturation time.

DESCRIPTION OF EMBODIMENTS

The latex composition according to the present invention is a latex composition comprising a conjugated diene polymer (A) latex and an alkali-soluble polymer (B), wherein the alkali-soluble polymer (B) contains 20 to 80 wt% of units of an $\alpha,\beta$-ethylenically unsaturated monocarboxylic acid monomer (b-i), and contains 20 to 80 wt% of units of an additional $\alpha,\beta$-ethylenically unsaturated monomer (b-ii) copolymerizable with the $\alpha,\beta$-ethylenically unsaturated monocarboxylic acid monomer (b-i).

<Conjugated diene polymer (A) latex>

The latex composition according to the present invention comprises a conjugated diene polymer (A) latex.

Examples of the conjugated diene polymer (A) latex include, but should not be particularly limited to, synthetic polyisoprene latices, styrene-isoprene-styrene block copolymer (SIS) latices, latices of natural rubber (deproteinized natural rubber) from which proteins are removed, nitrile group-containing conjugated diene copolymer latices, polybutadiene latices, styrene-butadiene copolymer latices, and the like. Among these, preferred are latices of polymers having isoprene units, such as synthetic polyisoprene latices, SIS latices, and deproteinized natural rubber latices, and particularly preferred are synthetic polyisoprene latices.

When a synthetic polyisoprene latex is used as the conjugated diene polymer (A) latex, the synthetic polyisoprene contained in the synthetic polyisoprene latex may be a homopolymer of isoprene, or may be a copolymerized product of isoprene and a different ethylenically unsaturated monomer copolymerizable therewith. The content of isoprene units in synthetic polyisoprene is preferably 70 wt% or more, more preferably 90 wt% or more, still more preferably 95 wt% or more, particularly preferably substantially 100 wt% (homopolymer of isoprene) relative to the total monomer units because a dip-molded article to be obtained can have flexibility and mechanical strengths such as tear strength and elongation at break at a higher level.

Examples of the different ethylenically unsaturated monomer copolymerizable with isoprene include conjugated diene monomers other than isoprene, such as butadiene, chloroprene, and 1,3-pentadiene; ethylenically unsaturated nitrile monomers such as acrylonitrile, methacrylonitrile, fumaronitrile, and $\alpha$-chloroacrylonitrile; vinyl aromatic monomers such as styrene and alkylstyrenes; ethylenically unsaturated carboxylic acid ester monomers such as methyl (meth) acrylate (which means "methyl acrylate and/or methyl methacrylate", and the same applies to ethyl (meth)acrylate below), ethyl (meth)acrylate, butyl (meth)acrylate, and 2-ethylhexyl (meth)acrylate; and the like. These different ethylenically unsaturated monomers copolymerizable with isoprene may be used alone or in combination. The content of the units of the different ethylenically unsaturated monomer copolymerizable with isoprene in the synthetic polyisoprene is preferably 30 wt% or less, more preferably 10 wt% or less, still more preferably 5 wt% or less, particularly preferably substantially 0 wt% (homopolymer of isoprene) relative to the total monomer units.

The synthetic polyisoprene can be prepared by a traditionally known method, for example, by solution polymerizing isoprene and the copolymerizable different ethylenically unsaturated monomer used as needed in an inert polymerization solvent using a Ziegler polymerization catalyst composed of trialkylaluminum-titanium tetrachloride or an alkyllithium polymerization catalyst such as n-butyllithium and sec-butyllithium. The polymer solution of the synthetic polyisoprene prepared by solution polymerization may be used as it is in production of the synthetic polyisoprene latex; alternatively, solid synthetic polyisoprene can be isolated from the polymer solution, then dissolved in an organic solvent, and used in production of the synthetic polyisoprene latex.

When the polymer solution of the synthetic polyisoprene is prepared by the above-mentioned method, impurities such as residues of the polymerization catalyst left in the polymer solution may be removed. Furthermore, an antioxidant described later may be added to the solution during or after polymerization. A commercially available solid synthetic polyisoprene can also be used.

As the isoprene units in the synthetic polyisoprene, there are four types of isoprene units which differ in bonding geometry of isoprene, i.e., cis bond units, trans bond units, 1,2-vinyl bond units, and 3,4-vinyl bond units. The content of cis bond units in the isoprene units contained in the synthetic polyisoprene is preferably 70 wt% or more, more preferably 90 wt% or more, still more preferably 95 wt% or more relative to the total isoprene units because a dip-molded article having further enhanced mechanical strengths such as tear strength and elongation at break can be obtained.

The weight average molecular weight of the synthetic polyisoprene is preferably 10,000 to 5,000,000, more preferably 500,000 to 5,000,000, still more preferably 800,000 to 3,000,000 measured by gel permeation chromatography calibrated with standard polystyrenes. When the weight average molecular weight of the synthetic polyisoprene is within the above ranges, a dip-molded article having further enhanced mechanical strengths such as tear strength and elongation at break can be obtained, and production of the synthetic polyisoprene latex tends to be facilitated.

The synthetic polyisoprene has a polymer Mooney viscosity ($ML_{1+4}$, 100°C) of preferably 50 to 80, more preferably 60 to 80, still more preferably 70 to 80.

Examples of a method of producing the synthetic polyisoprene latex include (1) a method of producing the synthetic polyisoprene latex by dissolving or finely dispersing synthetic polyisoprene in an organic solvent, emulsifying the resulting solution or microsuspension of synthetic polyisoprene in water in the presence of an emulsifier, and removing the organic solvent as needed, and (2) a method of directly producing the synthetic polyisoprene latex by emulsion polymerization or suspension polymerization of isoprene alone or a mixture of isoprene and an ethylenically unsaturated monomer copolymerizable therewith in the presence of an emulsifier. The production method (1) is preferred because a synthetic polyisoprene containing cis bond units in isoprene units in a high proportion can be used, and a dip-molded article having high mechanical strengths such as tear strength and elongation at break is likely to be obtained.

Examples of organic solvents used in the production method (1) include aromatic hydrocarbon solvents such as benzene, toluene, and xylene; alicyclic hydrocarbon solvents such as cyclopentane, cyclopentene, cyclohexane, and cyclohexene; aliphatic hydrocarbon solvents such as pentane, hexane, and heptane; halogenated hydrocarbon solvents such as methylene chloride, chloroform, and ethylene dichloride; and the like. Among these, preferred are alicyclic hydrocarbon solvents and aliphatic hydrocarbon solvents, more preferred are pentane, cyclohexane, and n-hexane, and particularly preferred is n-hexane.

The amount of the organic solvent used is preferably 2,000 parts by weight or less, more preferably 20 to 1,500 parts by weight, still more preferably 500 to 1,500 parts by weight relative to 100 parts by weight of the synthetic polyisoprene.

As the emulsifier used in the production method (1), use of ionic emulsifiers is preferred. Among these, use of anionic emulsifiers is more preferred. Examples of anionic emulsifiers include fatty acid salts such as sodium laurate, potassium myristate, sodium palmitate, potassium oleate, sodium linolenate, sodium rosinate, and potassium rosinate; alkylbenzene sulfonates such as sodium dodecylbenzenesulfonate, potassium dodecylbenzenesulfonate, sodium decylbenzenesulfonate, potassium decylbenzenesulfonate, sodium cetylbenzenesulfonate, and potassium cetylbenzenesulfonate; alkyl sulfosuccinates such as sodium di(2-ethylhexyl) sulfosuccinate, potassium di(2-ethylhexyl) sulfosuccinate, and sodium dioctylsulfosuccinate; alkyl sulfate ester salts such as sodium lauryl sulfate and potassium lauryl sulfate; polyoxyethylene alkyl ether sulfate ester salts such as sodium polyoxyethylene lauryl ether sulfate and potassium polyoxyethylene lauryl ether sulfate; monoalkyl phosphate salts such as sodium lauryl phosphate and potassium lauryl phosphate; and the like.

Among these anionic emulsifiers, referred are fatty acid salts, alkylbenzene sulfonates, alkyl sulfosuccinates, alkyl sulfate ester salts, and polyoxyethylene alkyl ether sulfate ester salts, and particularly preferred are fatty acid salts and alkylbenzene sulfonates.

Preferably, at least one selected from the group consisting of alkylbenzene sulfonates, alkyl sulfosuccinates, alkyl sulfate ester salts, and polyoxyethylene alkyl ether sulfate ester salts is used together with fatty acid salts, and particularly preferably, alkylbenzene sulfonates and fatty acid salts are used in combination because a trace amount of residual polymerization catalysts (particularly, aluminum and titanium) derived from the synthetic polyisoprene can be more efficiently removed and the formation of aggregates can be suppressed during production of the latex composition. The fatty acid salts are preferably sodium rosinate and potassium rosinate, and the alkylbenzene sulfonates are preferably sodium dodecylbenzenesulfonate and potassium dodecylbenzenesulfonate. These emulsifiers may be used alone or in combination.

As described above, by using the at least one selected from the group consisting of alkylbenzene sulfonates, alkyl sulfosuccinates, alkyl sulfate ester salts, and polyoxyethylene alkyl ether sulfate ester salts together with the fatty acid salt, a latex to be prepared contains at least one of alkylbenzene sulfonates, alkyl sulfosuccinates, alkyl sulfate ester salts, and polyoxyethylene alkyl ether sulfate ester salts; and the fatty acid salt.

Examples of ionic emulsifiers other than anionic emulsifiers include copolymerizable emulsifiers such as sulfo esters of α,β-unsaturated carboxylic acids, sulfate esters of α,β-unsaturated carboxylic acids, and sulfoalkylaryl ethers.

Further, any of nonionic emulsifiers such as polyoxyethylene alkyl ethers, polyoxyethylene alkyl phenol ethers, polyoxyethylene alkyl esters, and polyoxyethylene sorbitan alkyl esters may be used in combination as long as they do not inhibit coagulation by the action of a coagulant used in film molding such as dip molding.

The amount of the emulsifier used in the production method (1) is preferably 0.1 to 50 parts by weight, more preferably 0.5 to 30 parts by weight relative to 100 parts by weight of the synthetic polyisoprene. When two or more emulsifiers are used, the total amount of these emulsifiers used preferably falls within these ranges above. In other words, for example, when a combination of at least one selected from the group consisting of alkylbenzene sulfonates, alkyl sulfosuccinates, alkyl sulfate ester salts, and polyoxyethylene alkyl ether sulfate ester salts with the fatty acid salt is used, the total amount of these emulsifiers used preferably falls within the above-described ranges. When the emulsifier is used in an amount within the above ranges, the formation of aggregates during emulsion can be further suppressed.

When a combination of at least one selected from the group consisting of alkylbenzene sulfonates, alkyl sulfosuccinates, alkyl sulfate ester salts, and polyoxyethylene alkyl ether sulfate ester salts with the fatty acid salt is used as an anionic emulsifier, the ratio "fatty acid salt":"total amount of at least one emulsifier selected from the group consisting of alkylbenzene sulfonates, alkyl sulfosuccinates, alkyl sulfate ester salts, and polyoxyethylene alkyl ether sulfate ester salts" on a weight basis is in the range of preferably 1:1 to 10:1, more preferably 1:1 to 7:1. When at least one emulsifier selected from the group consisting of alkylbenzene sulfonates, alkyl sulfosuccinates, alkyl sulfate ester salts, and polyoxyethylene alkyl ether sulfate ester salts is used in a ratio within the above-described ranges, foaming of the synthetic polyisoprene can be suppressed during handling thereof. This can eliminate the need of processes such as long-term standing and addition of a defoamer, leading to improved work efficiency and reduced costs.

The amount of water used in the production method (1) is preferably 10 to 1,000 parts by weight, more preferably 30 to 500 parts by weight, most preferably 50 to 100 parts by weight relative to 100 parts by weight of the organic solvent solution of the synthetic polyisoprene. Examples of types of water used include hard water, soft water, deionized water, distilled water, zeolite water, and the like. Preferred are soft water, deionized water, and distilled water.

The apparatus for emulsifying the solution or microsuspension of the synthetic polyisoprene dissolved or finely dispersed in the organic solvent in the presence of the emulsifier is not particularly limited as long as it is an emulsifying apparatus or a dispersing machine generally commercially available. The emulsifier can be added to the solution or microsuspension of the synthetic polyisoprene by any method without limitation. The emulsifier may be preliminarily added to one or both of water and the solution or microsuspension of the synthetic polyisoprene, or may be added at one time or in portions to the liquid to be emulsified during the emulsification process.

Examples of emulsifying apparatuses include batch emulsifying apparatuses such as a trade name "Homogenizer" (available from IKA Works GmbH & Co. KG), a trade name "POLYTRON" (available from Kinematica AG), and a trade name "TK AUTO-HOMO MIXER" (available from Tokushu Kika Kogyo Co., Ltd.); continuous emulsifying apparatuses such as a trade name "TK PIPELINE-HOMO MIXER" (available from Tokushu Kika Kogyo Co., Ltd.), a trade name "Colloid mill" (available from Shinko Pantec Co., Ltd.), a trade name "SLASHER" (available from NIPPON COKE & ENGINEERING CO., LTD.), a trade name "Trigonal wet grinder" (available from Mitsui Miike Kakoki K.K.), a trade name "CAVITRON" (available from Eurotec, Ltd.), a trade name "MILDER" (available from Pacific Machinery & Engineering Co., Ltd.), and a trade name "Fine Flow Mill" (available from Pacific Machinery & Engineering Co., Ltd.); high pressure emulsifying apparatuses such as a trade name "Microfluidizer" (available from MIZUHO INDUSTRIAL CO., LTD.), a trade name "NANOMIZER" (available from Nanomizer Inc.), and a trade name "APV GAULIN" (available from Manton-Gaulin Company); membrane emulsifying apparatuses such as a trade name "Membrane emulsifying apparatus" (available from REICA Co., Ltd.); vibratory emulsifying apparatuses such as a trade name "VIBROMIXER" (available from REICA Co., Ltd.); ultrasonic emulsifying apparatuses such as a trade name "Ultrasonic homogenizer" (available from Branson Ultrasonics Corporation); and the like. The conditions for the emulsification process using such an emulsifying apparatus are not particularly limited, and the treatment temperature, the treatment time, and the like may be appropriately selected to ensure a desired dispersion state.

In the production method (1), the organic solvent is desirably removed from the emulsion prepared through the above-mentioned emulsification process. Preferred methods for removing the organic solvent from the emulsion are methods with which the amount of the organic solvent (preferably an alicyclic hydrocarbon solvent or an aliphatic hydrocarbon solvent) in the resulting synthetic polyisoprene latex can be reduced to 500 ppm by weight or less. For example, methods such as vacuum distillation, normal pressure distillation, water vapor distillation, and centrifugation can be used.

Further, to increase the solids content of the synthetic polyisoprene latex, a concentration method such as vacuum distillation, normal pressure distillation, centrifugation, or membrane concentration may be performed as needed after the removal of the organic solvent. In particular, centrifugation is preferably performed because it can increase the solids content of the synthetic polyisoprene latex and reduce the amount of residual emulsifier in the synthetic polyisoprene latex.

The centrifugation is preferably performed, for example, using a continuous centrifuge under the conditions where the centrifugal force is preferably 100 to 10,000 G, the solids content of the synthetic polyisoprene latex before centrifugation is preferably 2 to 15 wt%, the feed flow rate into the centrifuge is preferably 500 to 1700 Kg/hr, and the back pressure (gauge pressure) of the centrifuge is preferably 0.03 to 1.6 MPa. Thus, the synthetic polyisoprene latex can be obtained as a light solution after centrifugation. This process can reduce the amount of residual emulsifier in the synthetic polyisoprene latex.

As described above, the conjugated diene polymer (A) latex to be used can be a styrene-isoprene-styrene block copolymer (SIS) latex. In the term SIS, "S" represents a styrene block, and "I" represents an isoprene block.

The SIS contained in the SIS latex can be prepared by a traditionally known method, for example, by block copolymerization of isoprene and styrene in an inert polymerization solvent using an active organic metal such as n-butyllithium as an initiator. Although the thus-obtained polymer solution of the SIS may be used as it is in production of the SIS latex, a solid SIS can be isolated from the polymer solution, then dissolved in an organic solvent, and used in production of the SIS latex. The method for producing the SIS latex is preferably, but not particularly limited to, a method for producing the SIS latex by dissolving or finely dispersing the SIS in an organic solvent, emulsifying the resulting solution or microsuspension of the SIS in water in the presence of an emulsifier, and removing the organic solvent as needed.

At this time, after synthesis, impurities including residual polymerization catalyst in the polymer solution may be removed. Furthermore, an antioxidant as described later may be added to the solution during or after polymerization. Alternatively, a commercially available solid SIS can also be used.

Examples of usable organic solvents include the same organic solvents as those in the synthetic polyisoprene, and aromatic hydrocarbon solvents and alicyclic hydrocarbon solvents are preferred, and cyclohexane and toluene are particularly preferred. The amount of the organic solvent used is usually 50 to 2,000 parts by weight, preferably 80 to 1,000 parts by weight, more preferably 100 to 500 parts by weight, still more preferably 150 to 300 parts by weight relative to 100 parts by weight of the SIS.

Examples of emulsifiers include the same emulsifiers as those in the synthetic polyisoprene, and anionic emulsifiers are suitable, and potassium rosinate and sodium dodecylbenzenesulfonate are particularly preferred.

The amount of the emulsifier used is preferably 0.1 to 50 parts by weight, more preferably 0.5 to 30 parts by weight relative to 100 parts by weight of the SIS. By controlling the amount of the emulsifier used within the above ranges, a latex having improved stability can be obtained.

The amount of water used in the method for producing the SIS latex is preferably 10 to 1,000 parts by weight, more preferably 30 to 500 parts by weight, most preferably 50 to 100 parts by weight relative to 100 parts by weight of the organic solvent solution of the SIS. Examples of types of water include hard water, soft water, deionized water, distilled water, zeolite water, and the like. Further, any of polar solvents typified by alcohols such as methanol may be used in combination with water.

Examples of apparatuses for emulsifying an organic solvent solution or microsuspension of the SIS in water in the presence of an emulsifier include the same apparatuses as those listed for the synthetic polyisoprene. The emulsifier can be added in any manner without limitation. The emulsifier may be added in advance to one or both of water and the organic solvent solution or microsuspension of the SIS, or may be added at one time or in portions to the liquid to be emulsified during the emulsification process.

In the aforementioned method for producing the SIS latex, the SIS latex is preferably obtained by removing the organic solvent from the emulsion prepared through the emulsification process. The organic solvent can be removed from the emulsion by any method without limitation, and methods such as vacuum distillation, normal pressure distillation, water vapor distillation, and centrifugation can be used.

Further, to increase the solids content of the SIS latex, a concentration process by vacuum distillation, normal pressure distillation, centrifugation, membrane concentration, or the like may be performed as needed after the removal of the organic solvent.

The content of styrene units in styrene blocks of the SIS contained in the SIS latex thus prepared is preferably 70 to 100 wt%, more preferably 90 to 100 wt%, still more preferably 100 wt% relative to the total monomer units. The content of isoprene units in isoprene blocks of the SIS is preferably 70 to 100 wt%, more preferably 90 to 100 wt%, still more preferably 100 wt% relative to the total monomer units. The weight ratio between styrene units and isoprene units contained in the SIS, "styrene units:isoprene units" is within the range of usually 1:99 to 90:10, preferably 3:97 to 70:30, more preferably 5:95 to 50:50, still more preferably 10:90 to 30:70.

The weight average molecular weight of the SIS is preferably 10,000 to 1,000,000, more preferably 50,000 to 500,000, still more preferably 100,000 to 300,000 as measured by gel permeation chromatography calibrated with standard polystyrenes. When the weight average molecular weight of the SIS is within the above ranges, a dip-molded article satisfying flexibility and mechanical strengths such as tear strength and elongation at break at a higher level can be obtained, and production of the SIS latex tends to be facilitated.

As the conjugated diene polymer (A) latex, a latex of a natural rubber from which proteins are removed (deproteinized natural rubber) can also be used. As the latex of the deproteinized natural rubber, a so-called "deproteinized natural rubber latex" obtained by a known protein removal method such as a method of decomposing proteins in the natural rubber latex with a protease or a surfactant, for example, and removing the decomposed proteins by washing or centrifugation can also be used.

The conjugated diene polymer (A) used in the present invention may be an acid-modified conjugated diene polymer (A) obtained by proceeding a modification with a monomer having an acidic group, or may be a carboxy-modified conjugated diene polymer (A). The carboxy-modified conjugated diene polymer (A) can be obtained by modifying the conjugated diene polymer (A) with a monomer having a carboxyl group.

The conjugated diene polymer (A) can be modified with the monomer having a carboxyl group by any method without limitation. Examples thereof include graft-polymerization of the monomer having a carboxyl group onto the conjugated diene polymer (A) in an aqueous phase. Any method can be used without limitation to graft-polymerize the monomer having a carboxyl group onto the conjugated diene polymer in an aqueous phase, and conventionally known methods may be used. One preferred example is that after the monomer having a carboxyl group and a graft-polymerization catalyst are added to the conjugated diene polymer (A) latex, the monomer having a carboxyl group is reacted with the conjugated diene polymer (A) in an aqueous phase.

Examples of the graft-polymerization catalyst include, but should not be particularly limited to, inorganic peroxides such as sodium persulfate, potassium persulfate, ammonium persulfate, potassium perphosphate, and hydrogen peroxide; organic peroxides such as diisopropylbenzene hydroperoxide, cumene hydroperoxide, t-butyl hydroperoxide, 1,1,3,3-tetramethylbutyl hydroperoxide, di-t-butyl peroxide, isobutyryl peroxide, and benzoyl peroxide; azo compounds such as 2,2'-azobisisobutyronitrile, azobis-2,4-dimethylvaleronitrile, and methyl azobisisobutyrate; and the like. Preferred are organic peroxides, and particularly preferred is 1,1,3,3-tetramethylbutyl hydroperoxide because a dip-molded article having further enhanced mechanical strengths such as tear strength and elongation at break can be obtained. These graft-polymerization catalysts may be used alone or in combination.

These graft-polymerization catalysts can be used alone or in combination. Although the amount of the graft-polymerization catalyst used varies depending on its type, the amount is preferably 0.1 to 10 parts by weight, more preferably 0.2 to 5 parts by weight relative to 100 parts by weight of the conjugated diene polymer (A). Further, the graft polymerization catalyst can be added by any method without limitation, and any known addition method such as one-time addition, portion-wise addition, or continuous addition can be used.

Organic peroxides can be used in combination with reductants as a redox polymerization initiator. Examples of the reductants include, but are not particularly limited to, sodium formaldehyde sulfoxylate (SFS), hydrosulfite, dimethylamine, ascorbic acid, sucrose, ferrous sulfate, and the like. These reductants may be used alone or in combination.

Although the amount of the reductant(s) added is not particularly limited, the amount is preferably 0.01 to 1 part by weight relative to 1 part by weight of organic peroxide(s).

Any method for adding the organic peroxide and the reductant can be used without limitation, and any known addition method such as one-time addition, portion-wise addition, or continuous addition can be used.

The reaction temperature during the reaction of the monomer having a carboxyl group with the conjugated diene polymer (A) is not particularly limited, and is preferably 15 to 80°C, more preferably 30 to 50°C. The reaction time for the reaction of the monomer having a carboxyl group with the conjugated diene polymer (A) may be appropriately set according to the aforementioned reaction temperature, and is preferably 30 to 300 minutes, more preferably 60 to 120 minutes.

The solids content of the conjugated diene polymer (A) latex before the reaction of the monomer having a carboxyl group with the conjugated diene polymer (A) is not particularly limited, and is preferably 5 to 60 wt%, more preferably 10 to 40 wt%.

Examples of monomers having a carboxyl group include $\alpha,\beta$-ethylenically unsaturated monocarboxylic acid monomers such as acrylic acid and methacrylic acid; $\alpha,\beta$-ethylenically unsaturated polyvalent carboxylic acid monomers such as itaconic acid, maleic acid, fumaric acid, and butene tricarboxylic acid; partial ester monomers of $\alpha,\beta$-ethylenically unsaturated polyvalent carboxylic acids such as monobutyl fumarate, monobutyl maleate, and mono-2-hydroxypropyl maleate; polyvalent carboxylic anhydrides such as maleic anhydride and citraconic anhydride; and the like. Preferred are $\alpha,\beta$-ethylenically unsaturated monocarboxylic acid monomers, more preferred are acrylic acid and methacrylic acid, and still more preferred is methacrylic acid because further remarkable effects due to carboxy modification are achieved. These monomers may be used alone or in combination. The aforementioned carboxyl group is intended to encompass forms of salts with alkali metals, ammonia, or the like.

The amount of the monomer having a carboxyl group used is preferably 0.01 to 100 parts by weight, more preferably 0.01 to 40 parts by weight, still more preferably 0.5 to 20 parts by weight, further still more preferably 2 to 5 parts by weight relative to 100 parts by weight of the conjugated diene polymer (A).

The monomer having a carboxyl group can be added to the conjugated diene polymer (A) latex by any method without limitation, and any known addition method such as one-time addition, portion-wise addition, or continuous addition can be used.

The degree of modification of the carboxy-modified conjugated diene polymer (A) with the monomer having a carboxyl group may be appropriately controlled according to the intentional use of a film molded article to be obtained, such as a dip-molded article, and is preferably 0.01 to 10 wt%, more preferably 0.05 to 5 wt%, still more preferably 0.10 to 3 wt%, particularly preferably 0.15 to 2 wt%, most preferably 0.2 to 1 wt%. When the degree of modification falls within the above ranges, the latex composition has a more appropriate viscosity to facilitate transportation, and has further improved dispersion stability. Furthermore, such a latex composition can afford a dip-molded article satisfying flexibility and mechanical strengths such as tear strength and elongation at break at a higher level, in a shorter maturation time. The degree of modification is represented by the following formula:

$$\text{Degree of modification (wt\%)} = (X/Y) \times 100$$

In the above formula, X represents the weight of units of the monomer having a carboxyl group in the carboxy-modified conjugated diene polymer (A), and Y represents the weight of the carboxy-modified conjugated diene polymer (A). X can be determined by performing $^1$H-NMR analysis on the carboxy-modified conjugated diene polymer (A) and performed a calculation based on the result of $^1$H-NMR analysis or by determining its acid content by neutralization titration and performing a calculation based on the resulting acid content.

The latex of the conjugated diene polymer (A) used in the present invention (including the acid-modified conjugated diene polymer (A)) may contain additives that are generally blended in the field of latex, such as a pH adjuster, a defoamer, a preservative agent, a chelating agent, an oxygen scavenger, a dispersant, and an antioxidant.

Examples of pH adjusters include alkali metal hydroxides such as sodium hydroxide and potassium hydroxide; alkali metal carbonates such as sodium carbonate and potassium carbonate; alkali metal hydrogen carbonates such as sodium hydrogen carbonate; ammonia; organic amine compounds such as trimethylamine and triethanolamine; and the like. Preferred are alkali metal hydroxides or ammonia.

Although the latex of the conjugated diene polymer (A) (including the acid-modified conjugated diene polymer (A)) can have any pH, as described later, when a latex composition is prepared using the latex of the conjugated diene polymer (A) (including the acid-modified conjugated diene polymer (A)) and the like and maturated under a predetermined condition, the pH of the latex composition before maturation is preferably 10 or greater.

The latex of the conjugated diene polymer (A) (including the acid-modified conjugated diene polymer (A)) preferably contains particles of the conjugated diene polymer (A) (including the acid-modified conjugated diene polymer (A)) dispersed in water as a medium in a state at a pH of 8, and preferably has an absorbance of 0.3 or more in a concentration of 3 wt% and a pH of 8. The absorbance of the latex of the conjugated diene polymer (A) (including the acid-modified conjugated diene polymer (A)) in a concentration of 3 wt% and a pH of 8 is preferably 0.3 or more, more preferably 1.0 or more, still more preferably 1.2 or more, particularly preferably 1.4 or more, most preferably 1.6 or more.

Desirably, the latex of the conjugated diene polymer (A) (including the acid-modified conjugated diene polymer (A)) contains particles of the conjugated diene polymer (A) (including the acid-modified conjugated diene polymer (A)) dispersed in water as a medium not only in a state at a pH of 8 but also in a wide pH range of 2 to 14, and thus, desirably has an absorbance of 0.3 or more in a concentration of 3 wt% in a wide pH range of 2 to 14. The absorbance of the latex of the conjugated diene polymer (A) (including the acid-modified conjugated diene polymer (A)) in a concentration of 3 wt% in a wide pH range of 2 to 14 is preferably 0.3 or more, more preferably 1.0 or more, still more preferably 1.2 or more, particularly preferably 1.4 or more, most preferably 1.6 or more.

The absorbance of the latex of the conjugated diene polymer (A) (including the acid-modified conjugated diene polymer (A)) in a concentration of 3 wt% and a pH of 8 can be determined, for example, by adding a pH adjuster such as sulfuric acid, nitric acid, sodium hydroxide, or potassium hydroxide and water to the latex of the conjugated diene polymer (A) (including the acid-modified conjugated diene polymer (A)), and measuring the absorbance at a wavelength of 500 nm at a temperature of 25°C by a spectrophotometer while the pH is 8 and the solids content is 3 wt%.

The volume average particle size of particles of the conjugated diene polymer (A) (including the acid-modified conjugated diene polymer (A)) constituting the latex of the conjugated diene polymer (A) (including the acid-modified conjugated diene polymer (A)) is preferably 0.05 to 15 μm, more preferably 0.1 to 10 μm, still more preferably 0.1 to 5 μm, particularly preferably 0.5 to 3 μm, most preferably 0.5 to 2.0 μm. Preferably, the latex of the conjugated diene polymer (A) (including the acid-modified conjugated diene polymer (A)) is water-insoluble or poorly water-soluble in a state at a pH of 8, preferably, not only in a state at a pH of 8 but also in a wide pH range of 2 to 14, and thus has the above-mentioned volume average particle size in a state at a pH of 8, and further in such a wide pH range. The volume average particle size can be measured using a laser diffraction particle size distribution analyzer.

The solids content of the latex of the conjugated diene polymer (A) used in the present invention (including the acid-modified conjugated diene polymer (A)) is preferably 30 to 70 wt%, more preferably 40 to 70 wt%, still more preferably 50 to 70 wt%. By controlling the solids content within the above ranges, formation of aggregates in the latex can be more effectively suppressed, and separation of polymer particles during storage of the latex can be more effectively suppressed, resulting in a further enhancement in dispersion stability of the latex composition.

<Alkali-soluble polymer (B)>

The latex composition according to the present invention comprises an alkali-soluble polymer (B) containing 20 to 80 wt% of units of an $\alpha,\beta$-ethylenically unsaturated monocarboxylic acid monomer (b-i), in addition to the above-described conjugated diene polymer (A) latex.

The alkali-soluble polymer (B) is a polymer which contains 20 to 80 wt% of units of the $\alpha,\beta$-ethylenically unsaturated monocarboxylic acid monomer (b-i), and contains 20 to 80 wt% of units of an additional $\alpha,\beta$-ethylenically unsaturated monomer (b-ii) copolymerizable with the $\alpha,\beta$-ethylenically unsaturated monocarboxylic acid monomer (bi) (hereinafter, referred to "additional $\alpha,\beta$-ethylenically unsaturated monomer (b-ii)" depending on cases), and has solubility to or compatibility with an alkaline aqueous solution.

In the present invention, the "$\alpha,\beta$-ethylenically unsaturated monocarboxylic acid monomer (b-i)" refers to those which have only one carboxyl group or only one group formed of a carboxyl group forming a carboxylic acid salt and do not have an ester group. For example, in the present invention, the $\alpha,\beta$-ethylenically unsaturated dicarboxylic acid monoester is not included in the "$\alpha,\beta$-ethylenically unsaturated monocarboxylic acid monomer".

Examples of the $\alpha,\beta$-ethylenically unsaturated monocarboxylic acid monomer (b-i) include acrylic acid, methacrylic acid, 2-ethylacrylic acid, crotonic acid, cinnamic acid, and the like. Among these, acrylic acid and methacrylic acid are preferred, and methacrylic acid is more preferred because a dip-molded article satisfying flexibility and mechanical strengths such as tear strength and elongation at break at a higher level can be obtained. These monomers may be used alone or in combination.

The alkali-soluble polymer (B) contains 20 to 80 wt% of units of the $\alpha,\beta$-ethylenically unsaturated monocarboxylic acid monomer (b-i). An excessively small content of units of the $\alpha,\beta$-ethylenically unsaturated monocarboxylic acid monomer (b-i) leads to difficulties in affording a dip-molded article having excellent flexibility and tear strength in a relatively short maturation time.

Although it is sufficient that the content of units of the $\alpha,\beta$-ethylenically unsaturated monocarboxylic acid monomer (b-i) in the alkali-soluble polymer (B) is 20 to 80 wt% in 100 wt% of the total monomer units and the content is not particularly limited, the content is preferably 25 to 65 wt%, more preferably 30 to 55 wt%, still more preferably 35 to 45 wt%. When the content of units of the $\alpha,\beta$-ethylenically unsaturated monocarboxylic acid monomer (b-i) falls within the above ranges, the dispersion stability can be further enhanced, and a dip-molded article satisfying flexibility and mechanical strengths such as tear strength and elongation at break at a higher level can be obtained in a shorter maturation time.

The alkali-soluble polymer (B) contains units of the additional $\alpha,\beta$-ethylenically unsaturated monomer (b-ii) in addition to the units of the $\alpha,\beta$-ethylenically unsaturated monocarboxylic acid monomer (b-i).

Examples of the additional $\alpha,\beta$-ethylenically unsaturated monomer (b-ii) include, but are not particularly limited to, conjugated diene monomers such as butadiene, isoprene, chloroprene, and 1,3-pentadiene; $\alpha,\beta$-ethylenically unsaturated nitrile monomers such as acrylonitrile, methacrylonitrile, fumaronitrile, and $\alpha$-chloroacrylonitrile; vinyl aromatic monomers such as styrene and alkylstyrenes; $\alpha,\beta$-ethylenically unsaturated monocarboxylic acid ester monomers; $\alpha,\beta$-ethylenically unsaturated polyvalent carboxylic acid monomers; partial ester monomers of $\alpha,\beta$-ethylenically unsaturated polyvalent carboxylic acids; vinyl ester monomers of carboxylic acids, such as vinyl acetate; fluoroalkyl vinyl ethers such as fluoroethyl vinyl ether; ethylenically unsaturated amide monomers such as (meth)acrylamide, N-methylol (meth)acrylamide, N,N-dimethylol (meth)acrylamide, N-methoxymethyl(meth)acrylamide, and N-propoxymethyl(meth)acrylamide; cross-linkable monomers such as divinylbenzene, polyethylene glycol di(meth)acrylate, polypropylene glycol di(meth)acrylate, trimethylolpropane tri(meth)acrylate, and pentaerythritol (meth)acrylate; and the like. These additional $\alpha,\beta$-ethylenically unsaturated monomers (b-ii) may be used alone or in combination.

Examples of the $\alpha,\beta$-ethylenically unsaturated monocarboxylic acid ester monomers include, but are not particularly limited to, $\alpha,\beta$-ethylenically unsaturated monocarboxylic acid alkyl ester monomers; $\alpha,\beta$-ethylenically unsaturated monocarboxylic acid alkoxyalkyl ester monomers; $\alpha,\beta$-ethylenically unsaturated monocarboxylic acid aminoalkyl ester monomers; $\alpha,\beta$-ethylenically unsaturated monocarboxylic acid hydroxyalkyl ester monomers; $\alpha,\beta$-ethylenically unsaturated monocarboxylic acid fluoroalkyl ester monomers; and the like.

Examples of $\alpha,\beta$-ethylenically unsaturated monocarboxylic acids forming the $\alpha,\beta$-ethylenically unsaturated monocarboxylic acid ester monomers include acrylic acid, methacrylic acid, 2-ethylacrylic acid, crotonic acid, cinnamic acid, and the like. Among these, acrylic acid and methacrylic acid are preferred.

Examples of the $\alpha,\beta$-ethylenically unsaturated monocarboxylic acid alkyl ester monomers include acrylic acid alkyl ester monomers such as methyl acrylate, ethyl acrylate, propyl acrylate, isobutyl acrylate, n-butyl acrylate, n-pentyl acrylate, 2-ethylhexyl acrylate, and n-dodecyl acrylate; acrylic acid cycloalkyl ester monomers such as cyclopentyl acrylate and cyclohexyl acrylate; acrylic acid alkylcycloalkyl ester monomers such as methylcyclopentyl acrylate, ethylcyclopentyl acrylate, and methylcyclohexyl acrylate; methacrylic acid alkyl ester monomers such as methyl methacrylate, ethyl methacrylate, propyl methacrylate, n-butyl methacrylate, n-pentyl methacrylate, and n-octyl methacrylate; methacrylic acid cycloalkyl ester monomers such as cyclopentyl methacrylate, cyclohexyl methacrylate, and cyclopentyl methacrylate; methacrylic acid alkylcycloalkyl ester monomers such as methylcyclopentyl methacrylate, ethylcyclopentyl methacrylate, and methylcyclohexyl methacrylate; crotonic acid alkyl ester monomers such as propyl crotonate, n-butyl crotonate, and 2-ethylhexyl crotonate; crotonic acid cycloalkyl ester monomers such as cyclopentyl crotonate, cyclohexyl crotonate, and cyclooctyl crotonate; crotonic acid alkylcycloalkyl ester monomers such as methylcyclopentyl crotonate and methylcyclohexyl crotonate; and the like.

Examples of the α,β-ethylenically unsaturated monocarboxylic acid alkoxyalkyl ester monomers include acrylic acid alkoxyalkyl ester monomers such as methoxymethyl acrylate, methoxyethyl acrylate, methoxybutyl acrylate, ethoxymethyl acrylate, ethoxyethyl acrylate, ethoxypropyl acrylate, ethoxydodecyl acrylate, n-propoxyethyl acrylate, i-propoxyethyl acrylate, n-butoxyethyl acrylate, i-butoxyethyl acrylate, t-butoxyethyl acrylate, methoxypropyl acrylate, and methoxybutyl acrylate; methacrylic acid alkoxyalkyl ester monomers such as methoxymethyl methacrylate, methoxyethyl methacrylate, methoxybutyl methacrylate, ethoxymethyl methacrylate, ethoxyethyl methacrylate, ethoxypentyl methacrylate, n-propoxyethyl methacrylate, i-propoxyethyl methacrylate, n-butoxyethyl methacrylate, i-butoxyethyl methacrylate, t-butoxyethyl methacrylate, methoxypropyl methacrylate, and methoxybutyl methacrylate; and the like.

Among these, the α,β-ethylenically unsaturated monocarboxylic acid ester monomers are preferably methacrylic acid ester monomers and acrylic acid ester monomers, more preferably methacrylic acid alkyl ester monomers and acrylic acid alkyl ester monomers, still more preferably methyl acrylate, ethyl acrylate, propyl acrylate, methyl methacrylate, ethyl methacrylate, and propyl methacrylate, particularly preferably, methyl acrylate, ethyl acrylate, methyl methacrylate, and ethyl methacrylate, most preferably ethyl acrylate and methyl methacrylate because the dispersion stability can be further enhanced, and a dip-molded article satisfying flexibility and mechanical strengths such as tear strength and elongation at break at a higher level can be obtained in a shorter maturation time.

Examples of the α,β-ethylenically unsaturated polyvalent carboxylic acid monomers include butenedioic acids such as fumaric acid and maleic acid, itaconic acid, citraconic acid, mesaconic acid, glutaconic acid, allylmalonic acid, teraconic acid, and the like. Furthermore, polyvalent carboxylic anhydrides such as maleic anhydride, itaconic anhydride, and citraconic anhydride can be used as monomers for forming units of the α,β-ethylenically unsaturated polyvalent carboxylic acid monomer because a carboxyl group is formed by cleaving their acid anhydride group after copolymerization.

Examples of α,β-ethylenically unsaturated polyvalent carboxylic acids forming partial ester monomers of α,β-ethylenically unsaturated polyvalent carboxylic acids include the same ones as those listed in the α,β-ethylenically unsaturated polyvalent carboxylic acid monomers described above.

Examples of the partial ester monomers of α,β-ethylenically unsaturated polyvalent carboxylic acids include maleic acid monoalkyl esters such as monomethyl maleate, monoethyl maleate, monopropyl maleate, and mono-n-butyl maleate; maleic acid monocycloalkyl esters such as monocyclopentyl maleate, monocyclohexyl maleate, and monocycloheptyl maleate; maleic acid monoalkyl cycloalkyl esters such as monomethylcyclopentyl maleate and monoethylcyclohexyl maleate; fumaric acid monoalkyl esters such as monomethyl fumarate, monoethyl fumarate, monopropyl fumarate, and mono-n-butyl fumarate; fumaric acid monocycloalkyl esters such as monocyclopentyl fumarate, monocyclohexyl fumarate, and monocycloheptyl fumarate; fumaric acid monoalkyl cycloalkyl esters such as monomethylcyclopentyl fumarate and monoethylcyclohexyl fumarate; citraconic acid monoalkyl esters such as monomethyl citraconate, monoethyl citraconate, monopropyl citraconate, and mono-n-butyl citraconate; citraconic acid monocycloalkyl esters such as monocyclopentyl citraconate, monocyclohexyl citraconate, and monocycloheptyl citraconate; citraconic acid monoalkyl cycloalkyl esters such as monomethylcyclopentyl citraconate and monoethylcyclohexyl citraconate; itaconic acid monoalkyl esters such as monomethyl itaconate, monoethyl itaconate, monopropyl itaconate, and mono-n-butyl itaconate; itaconic acid monocycloalkyl esters such as monocyclopentyl itaconate, monocyclohexyl itaconate, and monocycloheptyl itaconate; itaconic acid monoalkyl cycloalkyl esters such as monomethylcyclopentyl and monoethylcyclohexyl itaconate; and the like.

The content of units of the monomer having a carboxyl group (monomer having a carboxyl group or a group formed of a carboxyl group forming a carboxylic acid salt, excluding the α,β-ethylenically unsaturated monocarboxylic acid monomer (b-i)) as units of the additional α,β-ethylenically unsaturated monomer (b-ii) in the alkali-soluble polymer (B) is preferably 5 wt% or less, more preferably 2 wt% or less, still more preferably 1 wt% or less in 100 wt% of the total monomer units.

The weight ratio of the content of units of the monomer having a carboxyl group as units of the additional α,β-ethylenically unsaturated monomer (b-ii) to that of units of the α,β-ethylenically unsaturated monocarboxylic acid monomer (b-i) in the alkali-soluble polymer (B) is preferably 10/100 or less, more preferably 5/100 or less, still more preferably 2/100 or less.

The content of units of the monomer having an acidic group (monomer having an acidic group or a group formed of an acidic group forming a salt, excluding the α,β-ethylenically unsaturated monocarboxylic acid monomer (b-i)) as units of the additional α,β-ethylenically unsaturated monomer (b-ii) in the alkali-soluble polymer (B) is preferably 5 wt% or less, more preferably 2 wt% or less, still more preferably 1 wt% or less in 100 wt% of the total monomer units.

The weight ratio of the content of units of the monomer having an acidic group as units of the additional α,β-ethylenically unsaturated monomer (b-ii) to that of units of the α,β-ethylenically unsaturated monocarboxylic acid monomer (b-i) in the alkali-soluble polymer (B) is preferably 10/100 or less, more preferably 5/100 or less, still more preferably 2/100 or less.

As units of the additional α,β-ethylenically unsaturated monomer (b-ii), the alkali-soluble polymer (B) preferably contains units of a monomer not having a carboxyl group, and more preferably contains units of a monomer not having an acidic group. Specifically, as units of the additional α,β-ethylenically unsaturated monomer (b-ii), the alkali-soluble polymer (B) preferably contains units of at least one monomer selected from the group consisting of conjugated diene monomers, vinyl aromatic monomers, α,β-ethylenically unsaturated monocarboxylic acid ester monomers, and vinyl ester monomers of carboxylic acids, and more preferably contains units of an α,β-ethylenically unsaturated monocarboxylic acid ester monomer. When an alkali-soluble polymer (B) containing units of the above-mentioned monomer is used, the dispersion stability can be further enhanced, and a dip-molded article satisfying flexibility and mechanical strengths such as tear strength and elongation at break at a higher level can be obtained in a shorter maturation time.

Preferably, the alkali-soluble polymer (B) contains units of two or more monomers as units of the additional α,β-ethylenically unsaturated monomer (b-ii). As one example, in addition to units of the α,β-ethylenically unsaturated monocarboxylic acid monomer (b-i), the alkali-soluble polymer (B) preferably contains units of at least two monomers selected from the group consisting of conjugated diene monomers, vinyl aromatic monomers, α,β-ethylenically unsaturated monocarboxylic acid ester monomers, and vinyl ester monomers of carboxylic acids, as units of the additional α,β-ethylenically unsaturated monomer (b-ii); in addition to the units of the α,β-ethylenically unsaturated monocarboxylic acid monomer (b-i), the alkali-soluble polymer (B) more preferably contains units of at least one monomer selected from the group consisting of conjugated diene monomers, vinyl aromatic monomers, and vinyl ester monomers of carboxylic acids, and units of an α,β-ethylenically unsaturated monocarboxylic acid ester monomer; in addition to the units of the α,β-ethylenically unsaturated monocarboxylic acid monomer (b-i), the alkali-soluble polymer (B) still more preferably contains units of at least one monomer selected from the group consisting of vinyl aromatic monomers and vinyl ester monomers of carboxylic acids, and units of an α,β-ethylenically unsaturated monocarboxylic acid ester monomer; and in addition to the units of the α,β-ethylenically unsaturated monocarboxylic acid monomer (b-i), the alkali-soluble polymer (B) particularly preferably contains units of a vinyl aromatic monomer and units of an α,β-ethylenically unsaturated monocarboxylic acid ester monomer. When an alkali-soluble polymer (B) containing units of the above-mentioned monomers is used, the dispersion stability can be further enhanced, and a dip-molded article satisfying flexibility and mechanical strengths such as tear strength and elongation at break at a higher level can be obtained in a shorter maturation time.

It is sufficient that the content of the units of the additional α,β-ethylenically unsaturated monomer (b-ii) in the alkali-soluble polymer (B) (the total content of the units of the additional α,β-ethylenically unsaturated monomers (b-ii) when units of two or more monomers are contained as the units of the additional α,β-ethylenically unsaturated monomer (b-ii)) is 20 to 80 wt% in 100 wt% of the total monomer units, and is not particularly limited. The content is preferably 35 to 75 wt%, more preferably 45 to 70 wt%, still more preferably 55 to 65 wt%. When the content of the units of the additional α,β-ethylenically unsaturated monomer (b-ii) falls within the above ranges, the dispersion stability can be further enhanced, and a dip-molded article satisfying flexibility and mechanical strengths such as tear strength and elongation at break at a higher level can be obtained in a shorter maturation time.

When the alkali-soluble polymer (B) contains units of an α,β-ethylenically unsaturated monocarboxylic acid ester monomer, the content of units of the α,β-ethylenically unsaturated monocarboxylic acid ester monomer is preferably 10 to 70 wt%, more preferably 15 to 60 wt%, still more preferably 20 to 50 wt%, particularly preferably 25 to 40 wt% in 100 wt% of the total monomer units, although not particularly limited thereto. When the content of the units of the α,β-ethylenically unsaturated monocarboxylic acid ester monomer falls within the above ranges, the dispersion stability can be further enhanced, or a dip-molded article satisfying flexibility and mechanical strengths such as tear strength and elongation at break at a higher level can be obtained.

When the alkali-soluble polymer (B) contains the units of the α,β-ethylenically unsaturated monocarboxylic acid ester monomer, the ratio of the content of the units of the α,β-ethylenically unsaturated monocarboxylic acid monomer (b-i) to that of the units of the α,β-ethylenically unsaturated monocarboxylic acid ester monomer in the alkali-soluble polymer (B), i.e., the weight ratio represented by "the content of the units of the α,β-ethylenically unsaturated monocarboxylic acid monomer (b-i):the content of the units of the α,β-ethylenically unsaturated monocarboxylic acid ester monomer" is preferably 100:10 to 100:400, more preferably 100:25 to 100:300, still more preferably 100:40 to 100:200, particularly preferably 100:50 to 100:100.

The content of units of a conjugated diene monomer in the alkali-soluble polymer (B) is preferably 40 wt% or less, more preferably 30 wt% or less, still more preferably less than 20 wt%, particularly preferably less than 10 wt% in 100 wt% of the total monomer units, although not particularly limited thereto. When the content of the units of the conjugated diene monomer falls within the above ranges, the dispersion stability can be further enhanced, or a dip-molded article satisfying flexibility and mechanical strengths such as tear strength and elongation at break at a higher level can be obtained. When the alkali-soluble polymer (B) contains the units of the conjugated diene monomer, the lower limit of the content of the units of the conjugated diene monomer can be 1 wt% or more, for example, although not particularly limited thereto. On the other hand, in one embodiment according to the present invention, the alkali-soluble polymer (B) does not need to substantially contain the units of the conjugated diene monomer (specifically, the content of the units of the conjugated diene monomer can be less than 1 wt%).

When the alkali-soluble polymer (B) contains the units of the conjugated diene monomer, the ratio of content of the units of the $\alpha,\beta$-ethylenically unsaturated monocarboxylic acid monomer (b-i) to the content of the units of the conjugated diene monomer in the alkali-soluble polymer (B), i.e., the weight ratio represented by "the content of the units of the $\alpha,\beta$-ethylenically unsaturated monocarboxylic acid monomer (b-i):the content of the units of the conjugated diene monomer" is preferably 100:1 to 100:200, more preferably 100:5 to 100:150, still more preferably 100:10 to 100:100.

When the alkali-soluble polymer (B) contains units of a vinyl aromatic monomer, the content of the units of a vinyl aromatic monomer is preferably 10 to 50 wt%, more preferably 20 to 40 wt%, still more preferably 25 to 35 wt% in 100 wt% of the total monomer units, although not particularly limited thereto. When the content of the units of the vinyl aromatic monomer falls within the above ranges, the dispersion stability can be further enhanced, or a dip-molded article satisfying flexibility and mechanical strengths such as tear strength and elongation at break at a higher level can be obtained.

When the alkali-soluble polymer (B) contains the units of the vinyl aromatic monomer, the ratio of the content of the units of the $\alpha,\beta$-ethylenically unsaturated monocarboxylic acid monomer (b-i) to the content of the units of the vinyl aromatic monomer in the alkali-soluble polymer (B), i.e., the weight ratio represented by "the content of the units of the $\alpha,\beta$-ethylenically unsaturated monocarboxylic acid monomer (b-i):the content of the units of the vinyl aromatic monomer" is preferably 100:10 to 100:150, more preferably 100:20 to 100:120, still more preferably 100:30 to 100:90, particularly preferably 100:50 to 100:70.

When the alkali-soluble polymer (B) contains units of a vinyl ester monomer of a carboxylic acid, the content of the units of the vinyl ester monomer of a carboxylic acid is preferably 5 to 40 wt%, more preferably 10 to 30 wt%, still more preferably 15 to 25 wt% in 100 wt% of the total monomer units, although not particularly limited thereto. When the content of the units of the vinyl ester monomer of a carboxylic acid falls within the above ranges, the dispersion stability can be further enhanced, or a dip-molded article satisfying flexibility and mechanical strengths such as tear strength and elongation at break at a higher level can be obtained.

When the alkali-soluble polymer (B) contains the units of the vinyl ester monomer of a carboxylic acid, the ratio of the content of the units of the $\alpha,\beta$-ethylenically unsaturated monocarboxylic acid monomer (b-i) to the content of the units of the vinyl ester monomer of a carboxylic acid in the alkali-soluble polymer (B), i.e., the weight ratio represented by "the content of the units of the $\alpha,\beta$-ethylenically unsaturated monocarboxylic acid monomer (b-i):the content of the units of the vinyl ester monomer of a carboxylic acid" is preferably 100:10 to 100:300, more preferably 100:20 to 100:250, still more preferably 100:30 to 100:200, particularly preferably 100:50 to 100:150.

The alkali-soluble polymer (B) has solubility to or compatibility with an alkaline aqueous solution. Specifically, the alkali-soluble polymer (B) has an absorbance of less than 0.3 in the form of an aqueous solution or aqueous dispersion having a concentration of 3 wt% and a pH of 8.

The absorbance thereof in the form of an aqueous solution or aqueous dispersion having a concentration of 3 wt% and a pH of 8 can be measured at a temperature of 25°C with a spectrophotometer as an absorbance at a wavelength of 500 nm. A sample for measuring the absorbance can be prepared as follows: For example, the alkali-soluble polymer (B) is dissolved or dispersed in water to control the concentration of the alkali-soluble polymer (B) to 3 wt%, and a pH adjuster such as sulfuric acid, nitric acid, sodium hydroxide, or potassium hydroxide is added to adjust the pH to 8. When the alkali-soluble polymer (B) is in the form of an aqueous solution or aqueous dispersion (e.g., latex), the sample for measuring the absorbance can be prepared as follows: For example, the aqueous solution or aqueous dispersion of the alkali-soluble polymer (B) is diluted or concentrated to control the concentration of the alkali-soluble polymer (B) to 3 wt%, and a pH adjuster is appropriately added to adjust the pH to 8.

The alkali-soluble polymer (B) in the form of an aqueous solution or aqueous dispersion having a concentration of 3 wt% and a pH of 8 has an absorbance of preferably less than 0.3, more preferably 0.15 or less, still more preferably 0.1 or less, particularly preferably 0.05 or less, most preferably 0.02 or less. The alkali-soluble polymer (B) desirably has solubility to or compatibility with an alkaline aqueous solution having a pH of 8 or more. When an alkali-soluble polymer (B) having an absorbance within the above ranges is used, the dispersion stability can be further enhanced, or a dip-molded article satisfying flexibility and mechanical strengths such as tear strength and elongation at break at a higher level can be obtained.

On the other hand, preferably, the alkali-soluble polymer (B) does not have solubility to or compatibility with water in the acidic pH range of 6 or less.

The weight average molecular weight of the alkali-soluble polymer (B) is preferably 20,000 to 1,000,000, more preferably 150,000 to 600,000, still more preferably 200,000 to 350,000 as measured by gel permeation chromatography calibrated with standard polystyrenes. When the weight average molecular weight of the alkali-soluble polymer (B) falls within the above ranges, the dispersion stability can be further enhanced, or a dip-molded article satisfying flexibility and mechanical strengths such as tear strength and elongation at break at a higher level can be obtained.

The content of the alkali-soluble polymer (B) in the latex composition according to the present invention is preferably 0.1 to 3.0 parts by weight, more preferably 0.2 to 2.0 parts by weight, still more preferably 0.3 to 1.5 parts by weight relative to 100 parts by weight of the conjugated diene polymer (A) contained in the latex composition according to the present invention. When the content of the alkali-soluble polymer (B) falls within the above ranges, the dispersion stability can be further enhanced, and further, a dip-molded article satisfying flexibility and mechanical strengths such as tear strength and elongation at break at a higher level can be obtained in a shorter maturation time.

The alkali-soluble polymer (B) can be prepared by copolymerizing a monomer mixture containing the $\alpha,\beta$-ethylenically unsaturated monocarboxylic acid monomer (b-i) and the additional $\alpha,\beta$-ethylenically unsaturated monomer (b-ii). Although the polymerization method is not particularly limited, emulsion polymerization is preferred. A conventional known method can be used for emulsion polymerization.

When the monomer mixture containing the $\alpha,\beta$-ethylenically unsaturated monocarboxylic acid monomer (b-i) and the additional $\alpha,\beta$-ethylenically unsaturated monomer (b-ii) is emulsion polymerized, polymerization auxiliary materials usually used, such as an emulsifier, a polymerization initiator, and a molecular weight modifier, can be used. These polymerization auxiliary materials can be added by any method without limitation, and any method such as initial one-time addition, portion-wise addition, or continuous addition can be used.

Examples of emulsifiers include, but should not be limited to, nonionic emulsifiers such as polyoxyethylene alkyl ethers, polyoxyethylene alkyl phenol ethers, polyoxyethylene alkyl esters, and polyoxyethylene sorbitan alkyl esters; anionic emulsifiers such as alkylbenzene sulfonates including potassium dodecylbenzenesulfonate and sodium dodecylbenzenesulfonate, higher alcohol sulfate ester salts, and alkyl sulfosuccinates; cationic emulsifiers such as alkyl trimethyl ammonium chlorides, dialkyl ammonium chlorides, and benzyl ammonium chloride; copolymerizable emulsifiers such as sulfo esters of $\alpha,\beta$-unsaturated carboxylic acids, sulfate esters of $\alpha,\beta$-unsaturated carboxylic acids, and sulfoalkyl aryl ethers; and the like. Among these, preferred are anionic emulsifiers, more preferred are alkylbenzene sulfonates, and particularly preferred are potassium dodecylbenzenesulfonate and sodium dodecylbenzenesulfonate. These emulsifiers can be used alone or in combination. The amount of the emulsifier used is preferably 0.1 to 10 parts by weight relative to 100 parts by weight of the monomer mixture.

Examples of polymerization initiators include, but should not be limited to, inorganic peroxides such as sodium persulfate, potassium persulfate, ammonium persulfate, potassium perphosphate, and hydrogen peroxide; organic peroxides such as diisopropylbenzene hydroperoxide, cumene hydroperoxide, t-butyl hydroperoxide, 1,1,3,3-tetramethylbutyl hydroperoxide, 2,5-dimethylhexane-2,5-dihydroperoxide, di-t-butyl peroxide, di-$\alpha$-cumyl peroxide, acetyl peroxide, isobutyryl peroxide, and benzoyl peroxide; azo compounds such as azobisisobutyronitrile, azobis-2,4-dimethylvaleronitrile, and methyl azobisisobutyrate; and the like. These polymerization initiators can be used alone or in combination. The amount of the polymerization initiator(s) used is preferably 0.01 to 10 parts by weight, more preferably 0.01 to 2 parts by weight relative to 100 parts by weight of the monomer mixture.

Further, the peroxide initiators can be used in combination with reductants as redox polymerization initiators. Examples of such reductants include, but should not be limited to, compounds containing reduced metal ions, such as ferrous sulfate and cuprous naphthenate; sulfonic acid compounds such as sodium methanesulfonate; amine compounds such as dimethylaniline; and the like. These reductants can be used alone or in combination. The amount of the reductant(s) is 3 to 1000 parts by weight relative to 100 parts by weight of the peroxide(s).

The amount of water used in emulsion polymerization is preferably 80 to 600 parts by weight, particularly preferably 100 to 200 parts by weight relative to 100 parts by weight of the total monomers.

Examples of the method of adding the monomers include a method of adding the monomers to be used into a reactor all at once; a method of continuously or intermittently adding the monomers as the polymerization proceeds; a method of adding a portion of the monomers to react the monomers to a specific conversion ratio, and then continuously or intermittently adding the remaining monomers to complete polymerization; and the like. Any one of the methods may be used. When the monomers are mixed and the mixture is continuously or intermittently added, the composition of the mixture may be fixed or varied. Further, the monomers used may be mixed in advance and then added into the reactor, or may be separately added into the reactor. Furthermore, emulsion polymerization is preferably performed under a condition at a pH of 7 or less, more preferably under a condition at a pH of 2 to 5 to stably perform emulsion polymerization and allow the alkali-soluble polymer (B) to be obtained in the form of a latex.

Further, polymerization auxiliary materials such as a chelating agent, a dispersant, a pH adjuster, an oxygen scavenger, and a particle size modifier can be used as needed, and both of the type and the amount of these polymerization auxiliary materials used are not particularly limited.

The polymerization temperature during emulsion polymerization, which is not particularly limited, is usually 3 to 95°C, preferably 5 to 60°C. The polymerization time is about 5 to 40 hours.

The monomer mixture is subjected to emulsion polymerization as described above, and the polymerization reaction is stopped by cooling the polymerization system or adding a polymerization terminator when a predetermined polymerization conversion ratio is reached. The polymerization conversion ratio at which the polymerization reaction is stopped is preferably 90 wt% or more, more preferably 93 wt% or more.

Examples of polymerization terminators include, but should not be limited to, hydroxylamine, hydroxyamine sulfate, diethylhydroxylamine, and hydroxyamine sulfonic acid and alkali metal salts thereof, sodium dimethyldithiocarbamate, hydroquinone derivatives, catechol derivatives, and aromatic hydroxydithiocarboxylic acids, such as hydroxydimethylbenzenethiocarboxylic acid, hydroxydiethylbenzenedithiocarboxylic acid, and hydroxydibutylbenzenedithiocarboxylic acid, and alkali metal salts thereof, and the like. The amount of the polymerization terminator used is preferably 0.05 to 2 parts by weight relative to 100 parts by weight of the monomer mixture.

After the polymerization reaction is stopped, unreacted monomers are removed as desired, and the solids content and the pH are adjusted. Thereby, the alkali-soluble polymer (B) can be obtained in the form of a latex. An antioxidant, a preservative agent, an antibacterial agent, a dispersant, and the like may be appropriately added, as needed, to the alkali-soluble polymer (B) latex thus prepared.

<Other compounding agents>

Moreover, it is preferred that the latex composition according to the present invention further contain a sulfur-based vulcanizing agent. Examples of sulfur-based vulcanizing agents include, but should not be limited to, sulfur-containing compounds such as sulfur such as powder sulfur, flowers of sulfur, precipitated sulfur, colloidal sulfur, surface-treated sulfur, and insoluble sulfur; sulfur chloride, sulfur dichloride, morpholine disulfide, alkyl phenol disulfides, caprolactam disulfide (N,N'-dithio-bis(hexahydro-2H-azepinone-2)), phosphorus-containing polysulfides, polymer polysulfides, and 2-(4'-morpholinodithio)benzothiazole; and the like. Among these, sulfur can be preferably used. These sulfur-based vulcanizing agents can be used alone or in combination.

The amount of the sulfur-based vulcanizing agent used is not particularly limited, but is preferably 0.1 to 10 parts by weight, more preferably 0.2 to 3 parts by weight relative to 100 parts by weight of the conjugated diene polymer (A) contained in the latex composition. When the content of the sulfur-based vulcanizing agent is within the above ranges, a dip-molded article satisfying flexibility and mechanical strengths such as tear strength and elongation at break at a higher level can be obtained.

Moreover, the latex composition may further contain a vulcanization accelerator. As the vulcanization accelerator, those conventionally used in dip molding can be used, and examples of the vulcanization accelerator include xanthogen compounds, such as xanthic acids, xanthates, xanthogen disulfides (a compound in which two xanthic acids are bonded via sulfur atoms or the like), xanthogen polysulfides (a compound in which three or more xanthic acids are bonded via sulfur atoms or the like); dithiocarbamic acids, such as diethyldithiocarbamic acid, dibutyldithiocarbamic acid, di-2-ethylhexyldithiocarbamic acid, dicyclohexyldithiocarbamic acid, diphenyldithiocarbamic acid, and dibenzyldithiocarbamic acid, and zinc salts thereof; 2-mercaptobenzothiazole, zinc 2-mercaptobenzothiazole, 2-mercaptothiazoline, dibenzothiazyl disulfide, 2-(2,4-dinitrophenylthio)benzothiazole, 2-(N,N-diethylthiocarbaylthio)benzothiazole, 2-(2,6-dimethyl-4-morpholinothio)benzothiazole, 2-(4'-morpholino-dithio)benzothiazole, 4-morpholinyl-2-benzothiazyl disulfide, 1,3-bis(2-benzothiazyl mercaptomethyl)urea, and the like. Among these, from the viewpoint of avoiding occurrence of delayed (Type IV) allergic reactions, xanthogen compounds are preferred, zinc diisopropyl xanthate and zinc dibutyl xanthate are more preferred, and zinc diisopropyl xanthate is particularly preferred. The vulcanization accelerators may be used alone or in combination.

The amount of the vulcanization accelerator used is preferably 0.05 to 5 parts by weight, more preferably 1 to 3 parts by weight relative to 100 parts by weight of the conjugated diene polymer (A) contained in the latex composition. When the amount of the vulcanization accelerator used is within the above ranges, a dip-molded article satisfying flexibility and mechanical strengths such as tear strength and elongation at break at a higher level can be obtained.

The latex composition may further contain zinc oxide. The amount of zinc oxide used is preferably 0.05 to 5 parts by weight, more preferably 1 to 3 parts by weight relative to 100 parts by weight of the conjugated diene polymer (A) contained in the latex composition.

Moreover, the latex composition can further contain optional compounding agents such as an antioxidant; a dispersant; an activator; a reinforcing agent such as carbon black, silica, or talc; a filler such as calcium carbonate or clay; an ultraviolet absorbing agent; and a plasticizer.

Examples of the method for preparing the latex composition according to the present invention include, but should not be limited to, a method of mixing the conjugated diene polymer (A) latex, the alkali-soluble polymer (B), and compounding agents optionally used, such as a sulfur-based vulcanizing agent and a vulcanization accelerator, using a dispersing machine such as a ball mill, a kneader, or a disper.

The latex composition according to the present invention is preferably the one prepared by mixing the conjugated diene polymer (A) latex, an aqueous solution or aqueous dispersion (e.g., latex) of the alkali-soluble polymer (B), and the compounding agents optionally used, more preferably the one prepared by mixing the conjugated diene polymer (A) latex, an aqueous solution of the alkali-soluble polymer (B), and the compounding agents optionally used. The concentration of the alkali-soluble polymer (B) in the aqueous solution or aqueous dispersion is preferably 20 to 80 wt%, more preferably 30 to 75 wt%, still more preferably 40 to 70 wt%. When a latex of the alkali-soluble polymer (B) is used, it is preferred that the latex of the alkali-soluble polymer (B) at a pH of 6 or less be configured with and contain particles of the alkali-soluble polymer (B) having a volume average particle size in the range of preferably 60 to 200 nm, the particles being dispersed in water as a medium, and it is preferred that the latex of the alkali-soluble polymer (B) in an acidic pH range of 6 or less be configured with and contain particles of the alkali-soluble polymer (B) having a volume average particle size in the range of 60 to 200 nm, the particles being dispersed in water as a medium. In other words, it is preferred that the latex of the alkali-soluble polymer (B) at a pH of 6 or less contain particles of the alkali-soluble polymer (B) dispersed in water as a medium and thus keep the form of a latex; on the other hand, the latex of the alkali-soluble polymer (B) at a pH of 8 or more demonstrate a property as an aqueous solution due to the particles of the alkali-soluble polymer (B) dissolved in or hydrated with water as a medium. The particles in the latex of the alkali-soluble polymer (B) have a volume average particle size of preferably 60 to 130 nm, more preferably 60 to 100 nm.

When the above-mentioned materials are mixed, the compounding agents such as a sulfur-based vulcanizing agent and a vulcanization accelerator may be used in the form of an aqueous dispersion preliminarily prepared using the above-mentioned dispersing machine.

When the pH of the latex composition is adjusted to 6 or less, the alkali-soluble polymer (B) is dispersed in water as a medium preferably while the state of particles is being kept. On the other hand, when the pH of the latex composition is adjusted to 8 or more, the alkali-soluble polymer (B) is preferably dissolved in or hydrated with water as a medium.

The solids content of the latex composition according to the present invention is not particularly limited, but is in the range of preferably 15 to 50 wt%, more preferably 35 to 45 wt% because the dispersion stability can be further improved, and the film thickness during dip molding can be favorably controlled.

Preferably, to obtain a dip-molded article having sufficient mechanical strengths such as tear strength and elongation at break, the latex composition according to the present invention is matured (also referred to a pre-vulcanized) before it is fed to dip molding. Since the latex composition according to the present invention comprises the alkali-soluble polymer (B) containing 20 to 80 wt% of units of the α,β-ethylenically unsaturated monocarboxylic acid monomer (b-i) in addition to the conjugated diene polymer (A) latex, a dip-molded article having excellent tear strength can be obtained even if the maturation temperature is a relatively low temperature, preferably 15 to 35°C, more preferably 20 to 27°C and the maturation time is preferably 8 to 72 hours, more preferably 8 to 48 hours. To more appropriately obtain a dip-molded article having high mechanical strengths such as tear strength and elongation at break even matured at a relatively low temperature in a short time, maturation is preferably performed in the state where the pH of the latex composition is adjusted to 8 or more, namely, the alkali-soluble polymer (B) is dissolved in or hydrated with water as a medium.

<Dip-molded article>

The dip-molded article according to the present invention is a film-type molded article produced by dip molding of the above-mentioned latex composition according to the present invention. Dip molding is a method of immersing a mold into the latex composition to deposit the composition on the surface of the mold, then pulling the mold out of the composition, and thereafter drying the composition deposited on the surface of the mold. The mold before the immersion into the latex composition may be preheated. Further, a coagulant can be used as needed before the immersion of the mold into the latex composition or after the pullout of the mold from the latex composition.

Specific examples of how to use a coagulant include a method (anode coagulant dipping) of immersing the mold into a coagulant solution before immersion into the latex composition to deposit the coagulant onto the mold, a method (Teague coagulant dipping) of immersing the mold on which the latex composition is deposited in a coagulant solution, and the like. Preferred is anode coagulant dipping because a dip-molded article having less thickness unevenness is obtained.

Specific examples of coagulants include water-soluble polyvalent metal salts such as metal halides such as barium chloride, calcium chloride, magnesium chloride, zinc chloride, and aluminum chloride; nitrates such as barium nitrate, calcium nitrate, and zinc nitrate; acetates such as barium acetate, calcium acetate, and zinc acetate; and sulfates such as calcium sulfate, magnesium sulfate, and aluminum sulfate. Among these, preferred are calcium salts, and more preferred is calcium nitrate. These water-soluble polyvalent metal salts can be used alone or in combination.

Such coagulants can be generally used as solutions in water, an alcohol, or a mixture thereof, and are preferably used as aqueous solutions. Such aqueous solutions may further contain a water-soluble organic solvent such as methanol or ethanol and a nonionic surfactant. Although the concentration of the coagulant varies depending on the type of the water-soluble polyvalent metal salt, it is preferably 5 to 50 wt%, more preferably 10 to 30 wt%.

After the mold is pulled out of the latex composition, usually, the mold is heated to dry the deposit formed on the mold. The conditions for drying are appropriately selected.

In the next step, the dip-molded layer formed on the mold is cross-linked by heating. The dip-molded layer can be cross-linked by performing a heat treatment at a temperature of usually 80 to 150°C for preferably 10 to 130 minutes. As a heating method, external heating methods using infrared rays or heated air or internal heating methods using high-frequency waves can be used. Among these, preferred is external heating using heated air. Before the heating treatment is performed, the dip-molded layer can be immersed in water, preferably in hot water of 30 to 70°C for about 1 to 60 minutes to remove water-soluble impurities (e.g., excessive emulsifiers, coagulants, and the like). The process for removing water-soluble impurities can be performed after the dip-molded layer is subjected to the heat treatment, but is preferably performed before the heating treatment because water-soluble impurities can be further efficiently removed.

Next, the dip-molded layer is detached from the mold for dip molding to obtain a dip-molded article. As a detaching method, a method of peeling the layer by hand or by water pressure or pressure of compressed air can be used. After the detaching, a heat treatment at a temperature of 60 to 120°C for 10 to 120 minutes may be further performed.

The dip-molded article has a film thickness of preferably 0.03 to 0.50 mm, more preferably 0.05 to 0.40 mm, particularly preferably 0.08 to 0.30 mm.

The dip-molded article according to the present invention is obtained using the above-mentioned latex composition according to the present invention, thus has excellent flexibility and tear strength, and can be particularly suitably used as gloves, for example. When the dip-molded articles are gloves, in order to prevent the dip-molded articles from sticking to each other at the contact surfaces and to impart slip for easily putting on and taking off the gloves, inorganic nanoparticles of talc or calcium carbonate or organic nanoparticles of starch particles may be applied to the surfaces of the gloves, or an elastomer layer containing nanoparticles may be formed on the surfaces of the gloves, or the surface layers of the gloves may be chlorinated.

Further, other than the aforementioned glove, the dip-molded article according to the present invention can also be used in medical supplies such as baby bottle nipples, droppers, tubes, water pillows, balloon stalls, catheters, and condoms; toys such as balloons, dolls, and balls; industrial supplies such as pressure molding bags and gas storage bags; fingerstalls; and the like.

EXAMPLES

Hereinafter, the present invention will be described in more detail by way of Examples, but these Examples should not be construed as limitations to the present invention. The term "part(s)" is on a weight basis unless otherwise specified. The physical properties were measured as follows.

<Solids content>

For each sample, 2 g (weight: X2) was accurately weighed on an aluminum dish (weight: X1), followed by drying in a hot air dryer at 105°C for 2 hours. Subsequently, after cooling in a desiccator, the weight (weight: X3) of the sample and the aluminum dish was measured to calculate the solids content according to the following calculation expression:

$$\text{Solids content (wt\%)} = (X3 - X1) \times 100/X2$$

<Volume average particle size>

The volume average particle size of the polymer particles constituting a latex was measured using a laser diffraction particle size distribution analyzer (trade name "SALD-2200", available from SHIMADZU CORPORATION).

<Absorbance in concentration of 3 wt% and pH of 8>

For polymers synthesized in Synthetic Examples, the absorbance in the form of an aqueous solution or aqueous dispersion thereof having a concentration of 3 wt% and a pH of 8 was measured by the following method. Specifically, water and a potassium hydroxide aqueous solution as a pH adjuster were added to a latex, aqueous solution, or aqueous dispersion of each of the polymers synthesized in Synthetic Examples to adjust the concentration and pH of the polymer, thus preparing a sample for measurement having a concentration of 3 wt% and a pH of 8. The obtained samples for measurement were measured for absorbance at a wavelength of 500 nm by a spectrophotometer at a temperature of 25°C.

<Amount of aggregates after maturation>

Each of latex compositions was maturated at 25°C for 48 hours, and the maturated latex composition (solids content: D wt%, weight: E) was filtered through a 200-mesh metal mesh made of stainless steel (weight: C) whose weight was preliminarily measured. This metal mesh was dried in a dryer at 105°C for 2 hours or longer, and then the weight (weight: F) of the metal mesh after drying was measured. Next, the amount (wt%) of aggregates was determined from the following formula. In Table 2, "<0.1" under "Amount of aggregates after maturation" indicates that the amount of aggregates is less than 0.1 wt%. It can be determined that the latex composition has higher dispersion stability as the amount of aggregates after maturation is smaller.

$$\text{Amount of aggregates} = [(F - C)/(D \times E)] \times 10000 \ (wt\%)$$

<Maturation time for reaching maximum strength >

A latex composition was maturated at 25°C, and the relation between the maturation time and the time until the tensile strength of the resulting dip-molded article reached the maximum strength was examined in measurement, thereby determining the maturation time for reaching the maximum strength. Specifically, after maturation was started, sampling of a latex composition was performed every 24 hours, thereby obtaining the latex compositions after maturation for varied maturation times. Using the latex compositions after maturation for varied maturation times, dip-molded articles were produced in the same manner as in Example 1 described later. For the resulting dip-molded articles, tensile strength was measured by the following method to determine the maturation time taken until the tensile strength reached the maximum strength, and this was defined as maturation time for reaching the maximum strength. It can be determined that productivity is higher as the maturation time for reaching the maximum strength is shorter.

The tensile strength was specifically measured by the following method. Specifically, first, according to ASTM D412, each dip-molded article was punched out using a dumbbell (trade name "SUPER DUMBBELL (type: SDMK-100C)", available from DUMBBELL CO., LTD.) to prepare a test piece for measuring tensile strength. The test piece was stretched at a stretching speed of 500 mm/min using a Tensilon universal tester (trade name "RTG-1210", available from ORIENTEC CORPORATION) to measure tensile strength (unit: MPa) immediately before break.

<500% modulus, tear strength, and elongation at break>

According to ASTM D624-00, each dip-molded article was left to stand in a constant temperature and humidity chamber at 23°C and a relative humidity of 50% for 24 hours or longer, and then was punched out with a dumbbell (trade name "Die C", available from DUMBBELL CO., LTD.) to prepare a test piece. The test piece was stretched at a stretching speed of 500 mm/min using a Tensilon universal tester (trade name "RTG-1210", available from A&D) to measure 500% modulus (unit: MPa), tear strength (unit: N/mm), and elongation at break (unit: %). It can be determined that a smaller 500% modulus indicates higher flexibility, and higher tear strength and higher elongation at break indicate higher mechanical strength.

<Synthetic Example 1>

(Production of conjugated diene polymer (synthetic polyisoprene) (A-1) latex)

Synthetic polyisoprene (trade name "NIPOL IR2200L", available from ZEON Corporation) was mixed with n-hexane (boiling point: 69°C), and was dissolved by raising the temperature to 60°C with stirring, thus preparing an n-hexane solution (a) of synthetic polyisoprene (synthetic polyisoprene concentration: 15 wt%).
On the other hand, potassium rosinate was added to water, and dissolved by raising the temperature to 60°C, thus preparing an emulsifier aqueous solution (b) (concentration: 1.5 wt%).
Next, the n-hexane solution (a) of synthetic polyisoprene and the emulsifier aqueous solution (b) obtained above, and sodium dodecylbenzenesulfonate were mixed using a mixer (product name "Multi Line mixer MS26-MMR-5.5L", available from SATAKE CHEMICAL EQUIPMENT MFG., LTD.). The mixing ratio was selected such that the content of potassium rosinate in the emulsifier aqueous solution (b) was 10 parts and that of sodium dodecylbenzenesulfonate was 5 parts relative to 100 parts of the synthetic polyisoprene in the n-hexane solution (a) of synthetic polyisoprene. Subsequently, these were mixed and emulsified at a rotational speed of 6000 rpm using an emulsifying apparatus (product name "CAVITRON CD1020", available from Pacific Machinery & Engineering Co., Ltd.), preparing an emulsified dispersion (c). In this process, the total feed flow rate of the n-hexane solution (a) of synthetic polyisoprene and the emulsifier aqueous solution (b) was 2,000 kg/hr, the temperature was 60°C, and the back pressure (gauge pressure) was 0.5 MPa.
Subsequently, the resulting emulsified dispersion (c) was heated to 80°C under a reduced pressure of -0.01 to -0.09 MPa (gauge pressure) to distill off n-hexane, affording an aqueous dispersion (d) of synthetic polyisoprene. In this process, a defoamer (trade name "SM5515", available from Dow Corning Toray Co., Ltd.) was continuously added by spraying in an amount of 300 ppm by weight relative to the synthetic polyisoprene in the emulsified dispersion (c). In the process of distilling off n-hexane, the emulsified dispersion (c) was adjusted to 70 vol% or less of the tank volume, and was gradually stirred at 60 rpm using a three-bladed inclined paddle as a stirring blade.
After the completion of distilling off of n-hexane, the resulting aqueous dispersion (d) of synthetic polyisoprene was concentrated using a continuous centrifuge (product name "SRG610", available from Alfa Laval AB) at 8,000 to 9,000 G, giving a conjugated diene polymer (synthetic polyisoprene) (A-1) latex (pH = 10.0) with a solids content of 60 wt% as a light solution. The conditions for centrifugation were as follows: the solids content of the aqueous dispersion (d) before centrifugation was 8 wt%, the flow rate during continuous centrifugation was 1300 kg/hr, and the back pressure (gauge pressure) of the centrifuge was 0.1 MPa. The obtained conjugated diene polymer (synthetic polyisoprene) (A-1) was measured by the above-mentioned methods, which revealed that the absorbance in a concentration of 3 wt% and a pH of 8 was 1.699, and the volume average particle size was 980 nm.

<Synthetic Example 2>

(Production of conjugated diene polymer (acid-modified polyisoprene) (A-2) latex)

In a reactor equipped with a stirrer and purged with nitrogen, 0.8 parts of sodium β-naphthalene sulfonate formaldehyde condensate (trade name "Demol T-45", available from Kao Corporation) as a dispersant diluted with 4 parts of distilled water relative to 100 parts of the conjugated diene polymer (synthetic polyisoprene) (A-1) was added over 5 minutes relative to 100 parts of the synthetic polyisoprene in the conjugated diene polymer (synthetic polyisoprene) (A-1) latex obtained in Synthetic Example 1. Thereafter, 3 parts of methacrylic acid as a carboxyl group-containing compound and 16 parts of distilled water were mixed to prepare a diluted solution of methacrylic acid, which was added into the reactor over 30 minutes. Then, 130 parts of distilled water relative to 100 parts of the synthetic polyisoprene in the conjugated diene polymer (synthetic polyisoprene) (A-1) latex was added into the reactor, and the conjugated diene polymer (synthetic polyisoprene) (A-1) latex was charged into the reactor, and heated to 30°C with stirring.
Further, using another reactor, a solution (e) composed of 7 parts of distilled water, 0.32 parts of sodium formaldehyde sulfoxylate (trade name "SFS", available from MITSUBISHI GAS CHEMICAL COMPANY, INC.), and 0.01 parts of ethylenediaminetetraacetic acid Fe/Na salt (trade name "Chelest Fe", available from CHELEST CORPORATION) was prepared. After 0.5 parts of 1,1,3,3-tetramethylbutyl hydroperoxide (trade name "PEROCTA H", available from NOF Corporation) was added into the reactor, the solution (e) was added into the reactor to cause a reaction at 30°C for 1 hour, followed by continuing stirring for another one hour. A 5 wt% potassium hydroxide aqueous solution was further added to the obtained reaction solution to adjust the pH to 8.2, and the reaction solution was concentrated by centrifuge, yielding a conjugated diene polymer (acid-modified polyisoprene) (A-2) latex (pH=8.1) with a solids content of 57.0 wt%. The resulting conjugated diene polymer (acid-modified polyisoprene) (A-2) latex was measured by the above-mentioned methods, which revealed that the degree of modification (grafting ratio) was 0.3 wt%, the absorbance in a concentration of 3 wt% and a pH of 8 was 1.523, and the volume average particle size was 100 nm.

<Synthetic Example 3>

(Production of aqueous solution of alkali-soluble polymer (methacrylic acid/ethyl acrylate/styrene copolymer) (B-1))

A monomer mixture composed of 40 parts of methacrylic acid, 30 parts of ethyl acrylate, and 28 parts of styrene, 0.4 parts of sodium dodecylbenzenesulfonate (available from Kao Corporation: NEOPELEX G15), and 0.5 parts of polyoxyethylene lauryl ether (available from Kao Corporation: EMALGEN 120) were mixed with 29.0 parts of deionized water by stirring, preparing a monomer mixture.
Then, separately from above, a glass reactor equipped with a reflux cooler, a dropping funnel, a thermometer, a nitrogen introducing port, and a stirrer was prepared, and 43.0 parts of deionized water, 0.04 parts of sodium dodecylbenzenesulfonate (available from Kao Corporation: NEOPELEX G15), and 0.06 parts of polyoxyethylene lauryl ether (available from Kao Corporation: EMALGEN 120) were placed into this glass reactor, followed by raising the temperature to 80°C with stirring. While the temperature was being kept at 80°C, 0.3 parts of ammonium persulfate dissolved in 5.7 parts of deionized water was added, and then, the monomer mixture obtained above was gradually added over 4 hours. After the end of the addition, stirring was further continued for 4 hours. Thereafter, the reaction was terminated by cooling, and a potassium hydroxide aqueous solution was added, preparing an aqueous solution of alkali-soluble polymer (methacrylic acid/ethyl acrylate/styrene copolymer) (B-1) having a solids content of 55 wt% and a pH of 8. The resulting aqueous solution of the alkali-soluble polymer (methacrylic acid/ethyl acrylate/styrene copolymer) (B-1) was measured by the above-mentioned method, which revealed that the absorbance in a concentration of 3 wt% and a pH of 8 was as shown in Table 1. The amounts of the monomer units in the resulting alkali-soluble polymer (methacrylic acid/ethyl acrylate/styrene copolymer) (B-1) were substantially the same as the charged amounts thereof.

<Synthetic Example 4>

(Production of aqueous solution of alkali-soluble polymer (methyl methacrylate/methacrylic acid/vinyl acetate copolymer) (B-2))

An aqueous solution of alkali-soluble polymer (methyl methacrylate/methacrylic acid/vinyl acetate copolymer) (B-2) having a solids content of 55 wt% and a pH of 8 was prepared in the same manner as in Synthetic Example 3 except that a monomer mixture composed of 60 parts of methyl methacrylate, 20 parts of methacrylic acid, and 20 parts of vinyl acetate was used as the monomer mixture. The resulting aqueous solution of alkali-soluble polymer (methyl methacrylate/methacrylic acid/vinyl acetate copolymer) (B-2) was measured by the above-mentioned method, which revealed that the absorbance in a concentration of 3 wt% and a pH of 8 was as shown in Table 1.

<Synthetic Example 5>

(Production of aqueous solution of alkali-soluble polymer (methacrylic acid/styrene/ethyl acrylate copolymer) (B-3))

An aqueous solution of alkali-soluble polymer (methacrylic acid/styrene/ethyl acrylate copolymer) (B-3) having a solids content of 55 wt% and a pH of 8 was prepared in the same manner as in Synthetic Example 3 except that a monomer mixture composed of 40 parts of methacrylic acid, 30 parts of styrene, and 28 parts of ethyl acrylate was used as the monomer mixture. The resulting aqueous solution of alkali-soluble polymer (methacrylic acid/styrene/ethyl acrylate copolymer) (B-3) was measured by the above-mentioned method, which revealed that the absorbance in a concentration of 3 wt% and a pH of 8 was as shown in Table 1.

<Synthetic Example 6>

(Production of aqueous solution of alkali-soluble polymer (methacrylic acid/isoprene/methyl methacrylate copolymer) (B-4))

An aqueous solution of alkali-soluble polymer (methacrylic acid/isoprene/methyl methacrylate copolymer) (B-4) having a solids content of 55 wt% and a pH of 8 was prepared in the same manner as in Synthetic Example 3 except that a pressure-resistant container equipped with a stirrer was used as a container for preparing the monomer mixture, a monomer mixture composed of 40 parts of methacrylic acid, 30 parts of isoprene, and 28 parts of methyl methacrylate was used as the monomer mixture, and a pressure-resistant reactor equipped with a stirrer was used as the reactor. The aqueous solution of alkali-soluble polymer (methacrylic acid/isoprene/methyl methacrylate copolymer) (B-4) was measured by the above-mentioned method, which revealed that the absorbance in a concentration of 3 wt% and a pH of 8 was as shown in Table 1.

<Synthetic Example 7>

(Production of conjugated diene polymer (isoprene/methacrylic acid copolymer) (A-3) latex)

A conjugated diene polymer (isoprene/methacrylic acid copolymer) (A-3) latex having a solids content of 55 wt% and a pH of 8 was prepared in the same manner as in Synthetic Example 6 except that methyl methacrylate was not used, the amount of methacrylic acid used was changed from 40 parts to 5 parts, and the amount of isoprene used was changed from 30 parts to 95 parts. The conjugated diene polymer (isoprene/methacrylic acid copolymer) (A-3) latex was measured by the above-mentioned method, which revealed that the absorbance in a concentration of 3 wt% and a pH of 8 was 1.523.

[Table 1]

Table 1

| Alkali-soluble polymer (B) | Monomer composition (wt%) | | | | | | Absorbance in concentration of 3 wt% and pH of 8 |
|---|---|---|---|---|---|---|---|
| | MAA | ST | EA | VAc | IP | MMA | |
| (B-1) | 40.8 | 28.6 | 30.6 | 0 | 0 | 0 | 0.013 |
| (B-2) | 20 | 0 | 0 | 20 | 0 | 60 | 0.043 |
| (B-3) | 40.8 | 30.6 | 28.6 | 0 | 0 | 0 | 0.077 |

(continued)

| Alkali-soluble polymer (B) | Monomer composition (wt%) | | | | | | Absorbance in concentration of 3 wt% and pH of 8 |
|---|---|---|---|---|---|---|---|
| | MAA | ST | EA | VAc | IP | MMA | |
| (B-4) | 40.8 | 0 | 0 | 0 | 30.6 | 28.6 | 0.124 |

MAA: Methacrylic acid
ST: Styrene
EA: Ethyl acrylate
VAc: Vinyl acetate
IP: Isoprene
MMA: Methyl methacrylate

<Example 1>

(Preparation of latex composition)

The aqueous solution of alkali-soluble polymer (methacrylic acid/ethyl acrylate/styrene copolymer) (B-1) prepared in Synthetic Example 3 was added to the conjugated diene polymer (acid-modified polyisoprene) (A-2) latex prepared in Synthetic Example 2. The aqueous solution of alkali-soluble polymer (methacrylic acid/ethyl acrylate/styrene copolymer) (B-1) was added in an amount such that the content of the alkali-soluble polymer (methacrylic acid/ethyl acrylate/styrene copolymer) (B-1) in the aqueous solution of alkali-soluble polymer (methacrylic acid/ethyl acrylate/styrene copolymer) (B-1) was 0.8 parts relative to 100 parts of the conjugated diene polymer (acid-modified polyisoprene) (A-2) in the conjugated diene polymer (acid-modified polyisoprene) (A-2) latex. While the resulting mixture was being stirred, 1.5 parts of zinc oxide, 1.0 part of sulfur, 2 parts of an antioxidant (trade name "Wingstay L", available from Chukyo Yushi Co., Ltd.), and 2.5 parts of zinc diisopropyl xanthate (cross-linking accelerator) in terms of solid content were added relative to 100 parts of the conjugated diene polymer (acid-modified polyisoprene) (A-2) in the mixture, preparing a latex composition having a pH of 8.3. The resulting latex composition was measured for amount of aggregates after maturation and maturation time for reaching the maximum strength.

(Maturation of latex composition)

Then, the resulting latex composition was placed in a thermostat at 25°C, and was matured for 48 hours.

(Production of dip-molded article)

A commercially available ceramic hand mold (available from SHINKO CERAMICS CO., LTD) was washed, followed by preheating in an oven at 70°C. Thereafter, the hand mold was immersed in a coagulant aqueous solution containing 18 wt% of calcium nitrate and 0.05 wt% of polyoxyethylene lauryl ether (trade name "EMALGEN 109P", available from Kao Corporation) for 5 seconds, and then was taken out of the coagulant aqueous solution. Subsequently, the hand mold was dried in an oven at 70°C for 30 minutes or more, thereby allowing the coagulant to deposit on the hand mold, so that the hand mold was coated with the coagulant. Thereafter, the hand mold coated with the coagulant was taken out of the oven, and was immersed for 10 seconds in the matured latex composition prepared above. Next, the hand mold was air dried at room temperature for 10 minutes, and was immersed in hot water at 60°C for 5 minutes to elute water-soluble impurities, thereby forming a dip-molded layer on the hand mold. Subsequently, the dip-molded layer formed on the hand mold was vulcanized by heating in an oven at temperature of 120°C for 30 minutes, and then was cooled to room temperature. Talc was spread, and the dip-molded layer was separated from the hand mold, obtaining a glove-shaped dip-molded article. The resulting dip-molded article was measured for 500% modulus, tear strength, and elongation at break by the above-mentioned methods. The results are shown in Table 2.

<Examples 2 to 5>

Latex compositions were prepared in the same manner as in Example 1 except that the type and amount of the alkali-soluble polymer (B) compounded were varied as shown in Table 1. The resulting latex compositions were measured in the same manner as in Example 1. Further, maturation and dip molding were performed in the same manner as in Example 1 except that the prepared latex compositions were used, and the measurements were performed in the same manner as in Example 1. The results are shown in Table 2.

<Example 6>

A latex composition was prepared in the same manner as in Example 1 except that the type of the conjugated diene polymer (A) latex was as shown in Table 1 and the vulcanization accelerator used in preparation of the latex composition was replaced by 0.3 parts of zinc diethyldithiocarbamate, 0.5 parts of zinc dibutyldithiocarbamate, and 0.7 parts of zinc 2-mercaptobenzothiazole salt. The resulting latex composition was measured in the same manner as in Example 1. Further, maturation and dip molding were performed in the same manner as in Example 1 except that the prepared latex composition was used, and the measurements were performed in the same manner as in Example 1. The results are shown in Table 2.

<Comparative Examples 1 to 3>

(Preparation of aqueous dispersion of dispersant)

Carboxyl groups in a styrene-maleic acid mono-sec-butyl ester-maleic acid monomethyl ester polymer (trade name "Scripset 550", available from Hercules) were 100% neutralized using sodium hydroxide, preparing an aqueous dispersion of dispersant (concentration: 10 wt%) containing the sodium salt of the polymer as a dispersant. The aqueous dispersion of the dispersant was measured by the above-mentioned method, which revealed that the absorbance in a concentration of 3 wt% and a pH of 8 was 0.88.

Latex compositions were prepared in the same manner as in Example 1 except that the type of the conjugated diene polymer (A) latex was as shown in Table 1, and the aqueous solution of alkali-soluble polymer (methacrylic acid/ethyl acrylate/styrene copolymer) (B-1) was replaced by the aqueous dispersion of the dispersant prepared above such that the amount of the dispersant relative to 100 parts of the conjugated diene polymer (A) was varied as shown in Table 1. The resulting latex compositions were measured in the same manner as in Example 1. Further, maturation and dip molding were performed in the same manner as in Example 1 except that the prepared latex compositions were used, and the measurements were performed in the same manner as in Example 1. The results are shown in Table 2.

<Comparative Example 4>

A latex composition was prepared in the same manner as in Example 1 except that the aqueous solution of alkali-soluble polymer (methacrylic acid/ethyl acrylate/styrene copolymer) (B-1) was not used, and maturation, dip molding, and measurements were performed in the same manner as in Example 1. The results are shown in Table 2.

<Comparative Example 5>

A latex composition was prepared in the same manner as in Comparative Example 4 except that the type of the conjugated diene polymer (A) latex was as shown in Table 1. The resulting latex composition was measured in the same manner as in Example 1. Furthermore, maturation and dip molding were performed in the same manner as in Example 1 except that the resulting latex composition was used. When the dip molding layer after vulcanization was separated from the hand mold, the dip molding layer after vulcanization was broken, and a glove-shaped dip-molded article could not be obtained.

<Comparative Example 6>

While the aqueous solution of alkali-soluble polymer (methacrylic acid/isoprene/methyl methacrylate copolymer) (B-4) was being stirred, 1.5 parts of zinc oxide, 1.5 parts of sulfur, 2 parts of an antioxidant (trade name "Wingstay L", available from Chukyo Yushi Co., Ltd.), and 2 parts of zinc diisopropyl xanthate (cross-linking accelerator) in terms of solid content were added to 100 parts of the alkali-soluble polymer (methacrylic acid/isoprene/methyl methacrylate copolymer) (B-4) in the aqueous solution, and an appropriate amount of a potassium hydroxide aqueous solution as a pH adjuster was added, preparing a composition having a pH of 10.1. The amount of aggregates after maturation was measured in the same manner as in Example 1 except that the composition prepared above was used instead of the latex composition. The results are shown in Table 2.

Furthermore, maturation and dip molding were performed in the same manner as in Example 1 except that the composition above was used instead of the latex composition. When the dip molding layer after vulcanization was separated from the hand mold, the dip molding layer after vulcanization was broken, and a glove-shaped dip-molded article could not be obtained.

<Comparative Example 7>

A latex composition was prepared in the same manner as in Example 1 except that the conjugated diene polymer (acid-modified polyisoprene) (A-2) latex was replaced by the conjugated diene polymer (synthetic polyisoprene) (A-1) latex, the aqueous solution of alkali-soluble polymer (methacrylic acid/ethyl acrylate/styrene copolymer) (B-1) was replaced by the conjugated diene polymer (isoprene/methacrylic acid copolymer) (A-3) latex, and the vulcanization accelerator used in preparation of the latex composition was replaced by 0.3 parts of zinc diethyldithiocarbamate, 0.5 parts of zinc dibutyldithiocarbamate, and 0.7 parts of zinc 2-mercaptobenzothiazole salt. The resulting latex composition was measured in the same manner as above. Further, maturation and dip molding were performed in the same manner as in Example 1 except that the prepared latex composition was used, and the measurements were performed in the same manner as in Example 1. The results are shown in Table 2.

[Table 2]

Table 2

| | Latex composition | | | | | | Evaluations of latex composition | | Evaluations of dip-molded article | | |
|---|---|---|---|---|---|---|---|---|---|---|---|
| | Conjugated diene polymer (A) latex | | Alkali-soluble polymer (B) | | Dispersant and the like | | Amount of aggregates after maturation | Maturation time for reaching maximum strength | 500% Modulus | Tear strength | Elongation at break |
| | Type of polymer | Amount of polymer compounded | Type | Amount compounded | Type | Amount compounded | | | | | |
| | | parts | | parts | | parts | wt% | hours | MPa | N/mm | % |
| Example 1 | (A-2) | 100 | (B-1) | 0.8 | - | 0 | <0.1 | 24 | 1.74 | 36.2 | 1069 |
| Example 2 | (A-2) | 100 | (B-1) | 0.4 | - | 0 | <0.1 | 24 | 1.78 | 36.0 | 1017 |
| Example 3 | (A-2) | 100 | (B-2) | 0.8 | - | 0 | <0.1 | 24 | 1.59 | 36.6 | 1035 |
| Example 4 | (A-2) | 100 | (B-3) | 0.8 | - | 0 | <0.1 | 24 | 2.04 | 41.1 | 970 |
| Example 5 | (A-2) | 100 | (B-4) | 0.8 | - | 0 | <0.1 | 24 | 1.90 | 36.9 | 1002 |
| Example 6 | (A-1) | 100 | (B-1) | 0.8 | - | 0 | <0.1 | 48 | 1.62 | 35.2 | 990 |
| Comp. Ex. 1 | (A-2) | 100 | - | 0 | Dispersant* | 0.8 | <0.1 | 24 | 2.35 | 39.9 | 895 |
| Comp. Ex. 2 | (A-2) | 100 | - | 0 | Dispersant* | 0.4 | <0.1 | 72 | 2.10 | 36.4 | 905 |
| Comp. Ex. 3 | (A-1) | 100 | - | 0 | Dispersant* | 0.8 | <0.1 | 168 | 0.45 | 3.2 | 1150 |
| Comp. Ex. 4 | (A-2) | 100 | - | 0 | - | 0 | 2.6 | 48 | 1.70 | 36.6 | 940 |
| Comp. Ex. 5 | (A-3) | 100 | - | 0 | - | 0 | <0.1 | unmeasurable | unmeasurable | | |

(continued)

| | Latex composition | | | | | | Evaluations of latex composition | | Evaluations of dip-molded article | | |
|---|---|---|---|---|---|---|---|---|---|---|---|
| | Conjugated diene polymer (A) latex | | Alkali-soluble polymer (B) | | Dispersant and the like | | Amount of aggregates after maturation | Maturation time for reaching maximum strength | 500% Modulus | Tear strength | Elongation at break |
| | Type of polymer | Amount of polymer compounded | Type | Amount compounded | Type | Amount compounded | | | | | |
| | | parts | | parts | | parts | wt% | hours | MPa | N/mm | % |
| Comp. Ex. 6 | - | 0 | (B-4) | 100 | - | 0 | <0.1 | unmeasurable | unmeasurable | | |
| Comp. Ex. 7 | (A-1) | 100 | - | 0 | Conjugated diene polymer (A-3) | 0.8 | <0.1 | <24 | 1.1 | 12.4 | 1110 |
| In the table, "Dispersant*" represents the sodium salt of styrene-maleic acid mono-sec-butyl ester-maleic acid monomethyl ester polymer. | | | | | | | | | | | |

24

Table 2 shows that in the latex compositions each comprising the conjugated diene polymer (A) latex and the alkali-soluble polymer (B) containing 20 to 80 wt% of units of the $\alpha,\beta$-ethylenically unsaturated monocarboxylic acid monomer (b-i), the amount of aggregates after maturation was small, the dispersion stability was enhanced, and the maturation time for reaching the maximum strength was reduced. For this reason, sufficient mechanical strength was obtained even if such latex compositions were matured in a relatively short maturation time. Furthermore, these latex compositions afforded dip-molded articles having excellent flexibility and tear strength (Examples 1 to 6).

In contrast, when the alkali-soluble conjugated diene polymer (B) was replaced by a polymer (styrene-maleic acid mono-sec-butyl ester-monomethyl maleate ester polymer or conjugated diene polymer (isoprene/methacrylic acid copolymer) (A-3)) which was not alkali-soluble, the obtained dip-molded articles had poor flexibility (Comparative Examples 1 and 2), the maturation time for reaching the maximum strength was increased (Comparative Examples 2 and 3), or sufficient mechanical strength was not obtained by maturation in a relatively short maturation time (Comparative Examples 3 and 7).

When only the conjugated diene polymer (A) was used as the polymer component and the alkali-soluble conjugated diene polymer (B) was not used, the amount of aggregates after maturation became large, and the dispersion stability was reduced (Comparative Example 4), or the dip molding layer could not be formed (Comparative Example 5).

Furthermore, when only the alkali-soluble conjugated diene polymer (B) was used as the polymer component and the conjugated diene polymer (A) was not used, the dip molding layer could not be formed (Comparative Example 6).

## Claims

1.  A latex composition comprising a conjugated diene polymer (A) latex and an alkali-soluble polymer (B), wherein the alkali-soluble polymer (B) contains 20 to 80 wt% of units of an $\alpha,\beta$-ethylenically unsaturated mono-carboxylic acid monomer (b-i), and contains 20 to 80 wt% of units of an additional $\alpha,\beta$-ethylenically unsaturated monomer (b-ii) copolymerizable with the $\alpha,\beta$-ethylenically unsaturated monocarboxylic acid monomer (b-i).

2.  The latex composition according to claim 1, wherein the alkali-soluble polymer (B) has an absorbance of less than 0.3 in the form of an aqueous solution or aqueous dispersion having a concentration of 3 wt% and a pH of 8.

3.  The latex composition according to claim 1 or 2, wherein the alkali-soluble polymer (B) contains methacrylic acid ester monomer units or acrylic acid ester monomer units as the units of the additional $\alpha,\beta$-ethylenically unsaturated monomer (b-ii) copolymerizable with the $\alpha,\beta$-ethylenically unsaturated monocarboxylic acid monomer (b-i).

4.  The latex composition according to any one of claims 1 to 3, wherein the content of the alkali-soluble polymer (B) is 0.1 to 3.0 parts by weight relative to 100 parts by weight of the conjugated diene polymer (A) contained in the latex composition.

5.  The latex composition according to any one of claims 1 to 4, wherein the conjugated diene polymer (A) is a polymer containing isoprene units.

6.  The latex composition according to any one of claims 1 to 5, wherein the conjugated diene polymer (A) is an acid-modified conjugated diene polymer.

7.  The latex composition according to any one of claims 1 to 6, further comprising a sulfur-based vulcanizing agent.

8.  The latex composition according to any one of claims 1 to 7, further comprising a vulcanization accelerator.

9.  A dip-molded article prepared by dip molding of the latex composition according to any one of claims 1 to 8.

## INTERNATIONAL SEARCH REPORT

| International application No. |
|---|
| **PCT/JP2023/007890** |

**A. CLASSIFICATION OF SUBJECT MATTER**

*C08L 9/10*(2006.01)i; *C08F 220/06*(2006.01)i; *C08J 5/02*(2006.01)i; *C08L 33/02*(2006.01)i
FI: C08L9/10; C08L33/02; C08F220/06; C08J5/02 CEQ

According to International Patent Classification (IPC) or to both national classification and IPC

**B. FIELDS SEARCHED**

Minimum documentation searched (classification system followed by classification symbols)

C08L9/10; C08F220/06; C08J5/02; C08L33/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2001-139871 A (ZEON CORP.) 22 May 2001 (2001-05-22) claims, examples, paragraphs [0030]-[0032] | 1-3, 5, 6 |
| A | | 4, 7-9 |
| X | WO 2015/046391 A1 (ZEON CORP.) 02 April 2015 (2015-04-02) claims, examples, paragraphs [0031]-[0036], [0044]-[0047] | 1-9 |
| X | WO 2020/111097 A1 (ZEON CORP.) 04 June 2020 (2020-06-04) claims, examples, paragraphs [0015], [0055]-[0059], [0061] | 1-9 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 March 2023** | **11 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

<table>
<tr><td colspan="2" align="center">INTERNATIONAL SEARCH REPORT<br>Information on patent family members</td><td colspan="2">International application No.<br><br>**PCT/JP2023/007890**</td></tr>
<tr><td>Patent document<br>cited in search report</td><td>Publication date<br>(day/month/year)</td><td>Patent family member(s)</td><td>Publication date<br>(day/month/year)</td></tr>
<tr><td>JP    2001-139871    A</td><td>22 May 2001</td><td>(Family: none)</td><td></td></tr>
<tr><td>WO    2015/046391    A1</td><td>02 April 2015</td><td>US    2016/0168366    A1<br>claims, examples, paragraphs<br>[0038]-[0049], [0059]-[0064]<br>EP    3029100    A1</td><td></td></tr>
<tr><td>WO    2020/111097    A1</td><td>04 June 2020</td><td>US    2022/0041845    A1<br>claims, examples, paragraphs<br>[0029], [0073]-[0078], [0080]<br>EP    3889215    A1<br>CN    113039240    A</td><td></td></tr>
</table>

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010098008 A